# EUROPEAN PATENT SPECIFICATION

(11) **EP 2 843 325 B1**
(45) Date of publication and mention of the grant of the patent: **26.10.2016**
(21) Application number: 12864019.0
(22) Date of filing: 27.11.2012
(51) Int. Cl.: F25B 47/02, F24D 19/10, F24D 3/18

(54) **CONTROL METHOD FOR HEATING SYSTEM, AND HEATING SYSTEM**
STEUERVERFAHREN FÜR EIN HEIZSYSTEM UND HEIZSYSTEM
PROCÉDÉ DE COMMANDE POUR SYSTÈME DE CHAUFFAGE ET SYSTÈME DE CHAUFFAGE

(30) Priority: 25.04.2012 JP 2012100406
(43) Date of publication of application: 04.03.2015
(73) Proprietor: Panasonic Intellectual Property Management Co., Ltd., Osaka-shi, Osaka 540-6207 (JP)
(72) Inventor: HAYASHIDA, Gaku, c/o Panasonic Corporation, Chuo-ku Osaka 540-6207 (JP); TAKASAKI, Shinichi c/o Panasonic Corporation, Chuo-ku Osaka 540-6207 (JP); KHAISONGKRAM, Wathanyoo, c/o Panasonic Corporation, Chuo-ku Osaka 540-6207 (JP)
(74) Representative: Grünecker Patent- und Rechtsanwälte PartG mbB
(86) International application number: PCT/JP2012/007585
(87) International publication number: WO 2013/160974

(56) References cited:
- WO-A1-2011/016551
- JP-A- 2002 195 650
- JP-A- 2003 302 131
- JP-A- 2004 020 097
- JP-A- 2004 156 847
- JP-A- 2004 156 847
- JP-A- 2008 180 473
- US-A- 4 940 079
- US-A1- 2012 047 920

## Description

### [Technical Field]

The present invention is related to heating system control methods, and in particular, to a control method for a heating system including a heat pump heating device.

### [Background Art]

A heat pump hot water supply device heats a refrigerant by absorbing heat from the atmosphere and compressing the refrigerant using electricity. The heat is then transferred to the water via a heat exchanger, creating hot water. The heat pump hot water supply device uses less energy than a conventional electric hot water heater. A heat pump heating device is an energy saving heating device that, similar to the heat pump hot water supply device, uses water heated by the heat pump for heating.

When the outside temperature is low, frost forms on the heat exchanger as the heat pump absorbs heat from the atmosphere. The more frost builds up on the heat exchanger, the more difficult heat is to absorb from the atmosphere. As a result, a problem arises that the output and efficiency of the heat pump decreases. For this reason, general heat pump apparatuses include a function for removing frost upon detection of a given amount of frost on the heat exchanger.

### [Citation List]

### [Patent Literature]

US 4 940 079 A discloses a refrigeration-coupled thermal energy storage (RCTES) control system which includes apparatus and methodology for establishing target cooling and heating storage conditions, and selecting between cooling and heating modes, based upon the out-door temperatures.

Said system can identify on-peak or off-peak periods during which the system is frequently used. Further, an auxiliary check is required to determine whether the outdoor coil requires defrosting. Two alternate defrost modes are provided with selection dependent on the defrost check. However, US 4 940 079 A does not discloses a method of controlling a heating system comprising the step of obtaining, from the power supply source, an output modulation instruction specifying an output modulation period during which power consumption by the heat pump is modulated.
[PTL 1] Japanese Unexamined Patent Application Publication No. 2010-249333

### [Summary of Invention]

### [Technical Problem]

The percentage of power used as the source of energy for covering thermal demands has increased along with the use of heat pumps in recent years. As such, the power demand peak continues to rise. For this reason, in addition to the conventional contract based system in which electricity costs increase during a peak time period, power companies have begun offering consumers the choice of a contract based system with somewhat reduced electricity costs in exchange for electric load modulation during a specified peak time period. Under this contract system, when the electric load is modulated during the peak time period, a problem arises in that comfort is sacrificed due to a decrease in room temperature resulting from an insufficient power output of the heat pump with respect to the demand of the heater.

Thus, in order to solve the above-mentioned problem, the present invention aims to provide a heat pump heating system control method which can easily stabilize grid power by implementing a peak cut and increase the comfort level of the user.

### [Solution to Problem]

A method of controlling a heating system according to an aspect of the present invention is a method of controlling a heating system that operates using power supplied from a power supply source. The heating system includes a heat pump that generates heat using the power supplied from the power supply source and a radiator unit that radiates the heat generated by the heat pump. The heat pump is operable in a heating mode for generating heat to be radiated by the radiating unit and a defrost mode for removing frost formed on the heat pump. The method includes: obtaining, from the power supply source, an output modulation instruction specifying an output modulation period during which power consumption by the heat pump is modulated; determining whether switching a mode of operation of the heat pump to the defrost mode is required; and causing the heat pump to switch the mode of operation to the defrost mode when switching the mode of operation to the defrost mode is determined to be required in the determining, and continue operating in the heating mode when switching the mode of operation to the defrost mode is not determined to be required in the determining. In the determining, switching the mode of operation to the defrost mode is determined to be required when a state of the heat pump satisfies a first defrost condition in a period before the output modulation instruction is obtained in the obtaining, and switching the mode of operation to the defrost mode is determined to be required when the state of the heat pump satisfies a second defrost condition in a given period occurring within a period starting when the output modulation instruction is obtained in the obtaining and ending at a start time of the output modulation period, the second defrost condition being more easily satisfied than the first defrost condition.

It should be noted that general or specific embodiments may be realized as a system, method, integrated circuit, computer program, storage media, or any elective combination thereof.

### [Advantageous Effects of Invention]

With the heat pump heating system control method according to the present invention, it is possible to avoid defrosting during the peak time period, during which power consumption increases. This contributes to the stabilization of grid power due to the peak cut and an increase in the comfort level of the user.

### [Brief Description of Drawings]

[FIG. 1] FIG. 1 is a flow chart outlining the processes performed by the heat pump heating system according to the first embodiment.
[FIG. 2] FIG. 2 is a block diagram showing the configuration of heat pump heating system according to the first embodiment.
[FIG. 3] FIG. 3 is a block diagram showing the heat pump heating device according to the first embodiment in detail.
[FIG. 4A] FIG. 4A shows the refrigerant cycle in the heat pump when operating in the heating mode according to the first embodiment.
[FIG. 4B] FIG. 4B shows the refrigerant cycle in the heat pump when operating in the defrost mode according to the first embodiment.
[FIG. 5] FIG. 5 is a block diagram showing the system control unit according to the first embodiment in detail.
[FIG. 6] FIG. 6 is a flow chart of the processes of the heat pump heating system as a whole according to the first embodiment.
[FIG. 7] FIG. 7 is a flow chart of the DR control process according to the first embodiment.
[FIG. 8] FIG. 8 is a flow chart of the heat pump (HP) control process according to the first embodiment.
[FIG. 9] FIG. 9 is a flow chart of the advance defrost control process according to the first embodiment.
[FIG. 10] FIG. 10 is an example of an advance defrost table according to the first embodiment.
[FIG. 11] FIG. 11 shows the required information for determining the heat exchanger surface temperature lower limit according to the first embodiment.
[FIG. 12] FIG. 12 shows an example of the shift in the defrost condition (the heat exchanger surface temperature lower limit) according to the first embodiment.
[FIG. 13] FIG. 13 shows shifts in the power consumption, electrical cost, and room temperature with the heat pump heating system according to the first embodiment.
[FIG. 14] FIG. 14 is a flow chart of the advance defrost control process according to the second embodiment.
[FIG. 15] FIG. 15 shows shifts in the power consumption and room temperature with the heat pump heating system according to the second embodiment.

### [Description of Embodiments]

### (Underlying Knowledge Forming Basis of the Present Invention)

For example, PTL 1 discloses a technique of generating an operation schedule for reducing power consumption using optimization problem solutions, along with a decrease in heat pump efficiency due to frost and a defrost timing chart.

However, with the method disclosed in PTL 1, when an operation schedule designed with power consumption in mind and the contract system disclosed in the Technical Problem section are used, there are times when the defrost cycle is used during the peak time period (when the cost of electricity is high). In this case, there is a problem that despite being in the peak time period during which room temperature decreases due to an insufficient power output of the heat pump, the room temperature decreases even further and comfort is sacrificed because it is not possible for the heat pump to cater to thermal demands while defrosting.

Moreover, when defrosting is performed during the peak time period, despite not being able to cater to thermal demands nor contributing to comfort, not only is it uneconomical due to the costly electricity rates, but an unnecessary load is placed on grid power. Furthermore, applying the technique disclosed in PTL 1 to optimize power consumption as well as electricity expenses and comfort is problematic because total cost increases and a solution cannot be obtained in real-time.

In order to solve the above-described problem, a method of controlling a heating system according to an aspect of the present invention is a method of controlling a heating system that operates using power supplied from a power supply source. The heating system includes a heat pump that generates heat using the power supplied from the power supply source and a radiator unit that radiates the heat generated by the heat pump. The heat pump is operable in a heating mode for generating heat to be radiated by the radiating unit and a defrost mode for removing frost formed on the heat pump. The method includes: obtaining, from the power supply source, an output modulation instruction specifying an output modulation period during which power consumption by the heat pump is modulated; determining whether switching a mode of operation of the heat pump to the defrost mode is required; and causing the heat pump to switch the mode of operation to the defrost mode when switching the mode of operation to the defrost mode is determined to be required in the determining, and continue operating in the heating mode when switching the mode of operation to the defrost mode is not determined to be required in the determining. In the determining, switching the mode of operation to the defrost mode is determined to be required when a state of the heat pump satisfies a first defrost condition in a period before the output modulation instruction is obtained in the obtaining, and switching the mode of operation to the defrost mode is determined to be required when the state of the heat pump satisfies a second defrost condition in a given period occurring within a period starting when the output modulation instruction is obtained in the obtaining and ending at a start time of the output modulation period, the second defrost condition being more easily satisfied than the first defrost condition.

With this, it is possible to avoid defrosting during the peak time period by, for example, setting the peak time period, during which power consumption increases, as the output modulation period. This contributes to the stabilization of grid power due to the peak cut, a decrease in user electricity expenses, and an increase in the comfort level of the user.

Moreover, the determining may be performed while the heat pump is not operating in the defrost mode after obtaining the output modulation instruction.

The method may further include modulating operation of the heat pump in the output modulation period. In the modulating, the heat pump may be caused to operate in an output modulation mode and prevented from operating in the defrost mode, the output modulation mode causing an output of the heat pump to be smaller than an output of the heat pump in the heating mode.

Moreover, in the output modulation mode, the heat pump may operate at an output no greater than half of a rated output of the heat pump.

Moreover, the heating system may hold information associating at least one of lengths of the output modulation period, outside temperatures, or outside humidities with respective ones of the second defrost conditions. In the obtaining, at least one of a length of the output modulation period, a current outside temperature, or a current outside humidity may be obtained. In the determining, whether switching the mode of operation of the heat pump to the defrost mode is required or not may be determined by comparing (i) the second defrost condition that is associated with the at least one of the length of the output modulation period, the current outside temperature, or the current outside humidity obtained in the obtaining, and (ii) a current state of the heat pump.

For example, the second defrost conditions held in the heating system may be easier to satisfy for longer durations of the output modulation period, values of the outside temperature that are more approximate to a given value, or higher values of the outside humidity.

In one example, the first defrost condition and the second defrost condition may include a lower limit for a surface temperature of a heat exchanger included in the heat pump. The lower limit for the surface temperature of the heat exchanger in the second defrost condition may be higher than the lower limit for the surface temperature of the heat exchanger in the first defrost condition.

In another example, the first defrost condition and the second defrost condition may include a lower limit for a temperature of a refrigerant in the heat pump. The lower limit for the temperature of the refrigerant in the second defrost condition may be higher than the lower limit for the temperature of the refrigerant in the first defrost condition.

Moreover, when the state of the heat pump satisfies a defrost complete condition indicating that the frost has been removed, the heat pump may be switched from the defrost mode to the heating mode. In the causing, the switching of the heat pump to the defrost mode may be timed so that a temperature of a room in which the radiator unit is installed returns to a level prior to the heat pump switching to the defrost mode before the start time of the output modulation period.

A heating system according to an aspect of the present invention is a heating system that operates using power supplied from a power supply source. The heating system includes a heating device and a system control unit configured to control the heating device. The heating device includes: a heat pump that generates heat using the power supplied from the power supply source; a radiator unit configured to radiate the heat generated by the heat pump; and a heat pump (HP) control unit configured to control operation of the heat pump. The heat pump is switchable between a heating mode for generating heat to be radiated by the radiator unit and a defrost mode for removing frost formed on the heat pump. The system control unit includes: an obtaining unit configured to obtain, from the power supply source, an output modulation instruction specifying an output modulation period during which power consumption by the heat pump is modulated; a defrost determination unit configured to determine whether switching a mode of operation of the heat pump to the defrost mode is required; and a defrost instruction unit configured to cause the heat pump to switch the mode of operation to the defrost mode when the defrost determination unit determines that switching the mode of operation to the defrost mode is required, and continue operating in the heating mode when the defrost determination unit does not determine that switching the mode of operation to the defrost mode is required. When a state of the heat pump satisfies a first defrost condition in a period before the obtaining unit obtains the output modulation instruction, the HP control unit is configured to switch the mode of operation of the heat pump to the defrost mode. The defrost determination unit of the system control unit is configured to determine that, when the state of the heat pump satisfies a second defrost condition in a given period occurring within a period starting when the obtaining unit obtains the output modulation instruction and ending at a start time of the output modulation period, switching the mode of operation to the defrost mode is required, the second defrost condition being more easily satisfied than the first defrost condition.

The heating device may further include a heat pump control unit configured to control operation of the heat pump. When the heat pump control unit obtains the notification from the instruction unit, the heat pump control unit may be configured to switch the mode of operation of the heat pump to the defrost mode before the start time of the output modulation period.

Moreover, when the defrost determination unit determines that the state of the heat pump in the given period does not satisfy the first condition, the heat pump control unit may be configured to cause the heat pump to operate in the heating mode, without switching the mode of operation of the heat pump to the defrost mode before the start time of the output modulation period.

The heating device may further include a heat exchanger surface temperature detecting unit.

The heat pump system control unit may further include an output modulation operation control unit configured to cause the heat pump to operate in an output modulation mode in the output modulation period, the output modulation mode causing an output of the heat pump to be smaller than an output of the heat pump in the heating mode.

A heating system according to another aspect of the present invention is a heating system that operates using power supplied from a power supply source. The heating system includes a heating device. The heating device includes: a heat pump that generates heat using the power supplied from the power supply source; a radiator unit configured to radiate the heat generated by the heat pump; a heat pump control unit configured to switch a mode of operation of the heat pump between a heating mode for generating heat to be radiated by the radiator unit and a defrost mode for removing frost formed on the heat pump; and a system control unit configured to control the heat pump control unit. The system control unit includes an obtaining unit configured to obtain, from the power supply source, an output modulation instruction specifying an output modulation period during which power consumption by the heat pump is modulated; a defrost determination unit configured to determine whether switching the mode of operation of the heat pump to the defrost mode is required; and a defrost instruction unit configured to cause the heat pump to switch the mode of operation to the defrost mode when the defrost determination unit determines that switching the mode of operation to the defrost mode is required, and continue operating in the heating mode when the defrost determination unit does not determine that switching the mode of operation to the defrost mode is required. The defrost determination unit is configured to: determine that switching the mode of operation to the defrost mode is required when a state of the heat pump satisfies a first defrost condition in a period before the obtaining unit obtains the output modulation instruction; and determine that switching the mode of operation to the defrost mode is required when the state of the heat pump satisfies a second defrost condition in a given period occurring within a period starting when the obtaining unit obtains the output modulation instruction and ending at a start time of the output modulation period, the second defrost condition being more easily satisfied than the first defrost condition.

Hereinafter, certain exemplary embodiments are described in greater detail with reference to the accompanying Drawings. Each of the exemplary embodiments described below shows a general or specific example. The numerical values, shapes, materials, structural elements, the arrangement and connection of the structural elements, steps, the processing order of the steps etc. shown in the following exemplary embodiment are mere examples, and therefore do not limit the present disclosure. It should be noted that the present invention is specified based on the recitation of the Claims. Therefore, among the structural elements in the following exemplary embodiments, structural elements not recited in any one of the independent claims defining the most generic part of the inventive concept are described as arbitrary structural elements.

### (First Embodiment)

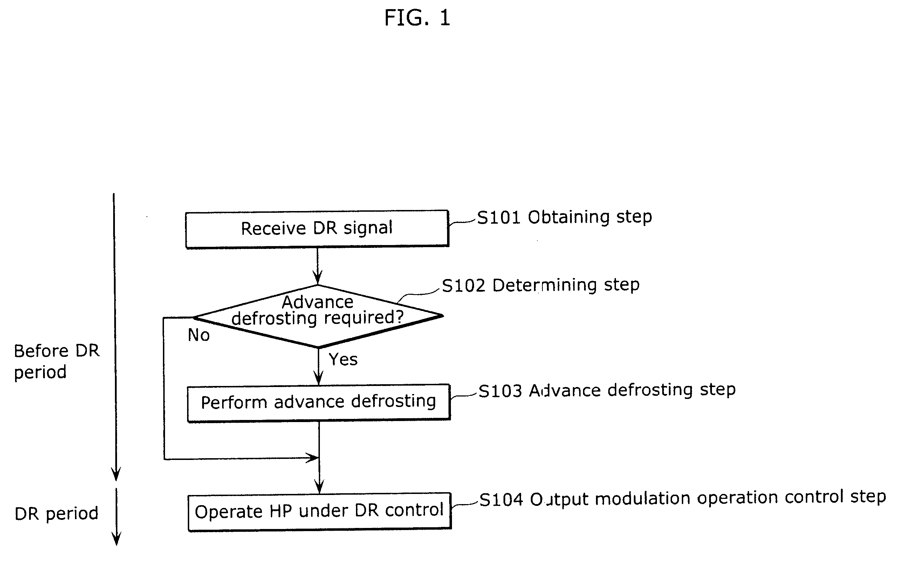

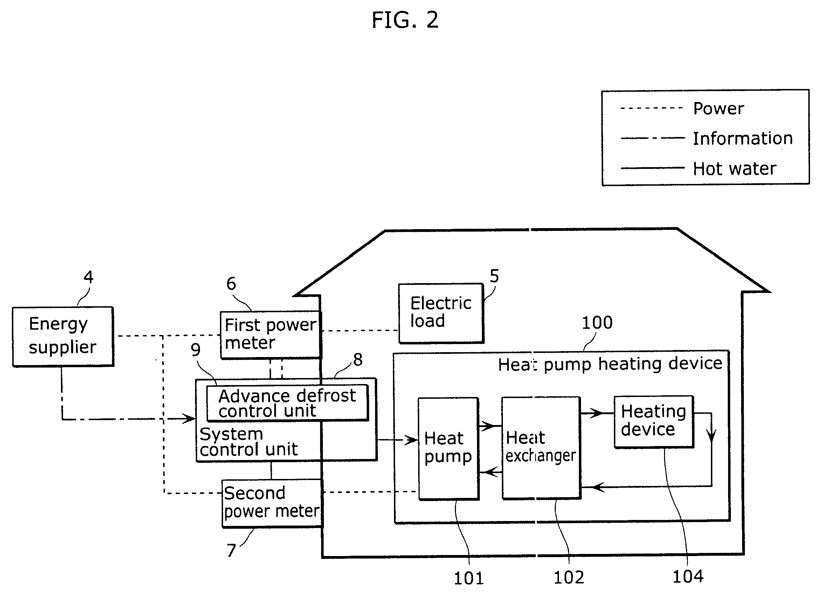

First, the heat pump heating system control method according to the first embodiment of the present invention will be outlined with reference to FIG. 1. FIG. 1 is a flow chart outlining the control processes performed by heat pump heating system according to the first embodiment. As FIG. 2 shows, the heat pump heating system 1 includes a heat pump heating device 100 and a system control unit 8.

As FIG. 1 shows, the heat pump heating system according to the first embodiment first receives an output modulation signal (hereinafter also referred to as a demand response (DR) signal) for the high electricity cost time period from the energy supplier (S101). The DR signal includes information specifying an output modulation period (hereinafter also referred to as a DR period) which is a time period during which power consumption by the heat pump is reduced.

The output modulation period is a period arbitrarily designated by the energy supplier. The output modulation period can be, for example, a peak power supply period of the energy supplier, such as a two hour period from 18:00 to 20:00. Moreover, the heat pump heating system receives the DR signal before the DR period start time (for example, at 17:30).

Next, before the start of the DR period, the heat pump heating system determines the necessity of advance defrosting (S102). More specifically, the heat pump heating system measures the outside temperature, the outside humidity, and the surface temperature of the heat exchanger. The heat pump heating system, moreover, stores an advance defrost table in which combinations of specific outside temperatures, outside humidity values, and DR period lengths are each associated with a heat exchanger surface temperature threshold value (lower limit value). The heat pump heating system obtains, from the advance defrost table, the heat exchanger surface temperature threshold value (lower limit value) associated with the current outside temperature, outside humidity, and DR period length, and then determines the necessity of defrosting the heat exchanger in advance by comparing the obtained threshold value with the current surface temperature of the heat exchanger.

It should be noted that the advance defrost table holds the results of actual tests performed to identify whether or not the state of the heat pump operating under certain conditions in the DR period satisfies the defrost condition (more specifically, the first defrost condition to be described later). In other words, the current surface temperature of the heat exchanger dropping below the heat exchanger surface temperature lower limit obtained from the advance defrost table signifies that defrosting during the DR period is likely to be required. Details regarding the advance defrost table will be discussed later.

Next, when the heat pump heating system determines that advance defrosting is required (yes in S102), the heat pump heating system performs defrosting before the start of the DR period (S103). It should be noted that the timing of determining whether advance defrosting is required or not is determined according to the amount of time required to defrost the heat exchanger. Moreover, when the heat pump heating system does not determine that defrosting in advance is required (no in S102), the heat pump is made to operate normally, without performing the advance defrosting. Here, normal heat pump operation refers to operation under control by the HP control unit 103 (to be described later), and not operation under control by the system control unit 8.

Lastly, the heat pump heating system switches the operation conditions of the heat pump at the start time of the DR period and operates the heat pump under the DR period operation conditions from the start of the DR period to the end of the DR period (S104). The DR period operation conditions are, for example, operation conditions that cause the heat pump to generate an amount of heat per unit time (second amount of heat: 2 kW, for example) that is less than an amount of heat generated per unit time by the heat pump in a period other than the DR period (first amount of heat: 4 kW, for example). Here, the second amount of heat is half the normal rated power (4 kW) or less (2 kW, for example).

In this way, when the heat pump heating system determines that defrosting during the DR period is likely to be required, it is possible to avoid operating in the high power-consuming defrost mode during the DR period by performing the defrosting operation in advance. As a result, advantageous effects of the DR period heat pump control can be achieved, such as the reduction in power consumption sought by the energy supplier, savings for electricity consumers, and the preservation of user comfort.

FIG. 2 shows the heat pump heating system 1 according to the first embodiment. As FIG. 2 shows, the heat pump heating system 1 includes the heat pump heating device 100 and the system control unit 8.

In the example shown in FIG. 2, power is delivered to a home (building) from an energy supplier (power supply source) 4 via a first and second power grid. The first power grid is a power grid that provides a stable supply of power. Moreover, the first power grid is a power grid having a relatively high electrical utility rate, and the amount of power consumed from the first power grid is measured by a first power meter 6. On the other hand, the second power grid is a power grid through which the energy supplier 4 can reduce the supply of power for a given time period. Moreover, the second power grid is a power grid having an electrical utility rate that is lower than that of the first power grid, and the amount of power consumed from the second power grid is measured by a second power meter 7.

Moreover, an electric load 5, a heating system control unit 8, and a heat pump heating device 100 are installed inside the home shown in FIG. 2. The heat pump heating device 100 includes at least a heat pump (heat generation unit) 101, a heat exchanger 102, and a heating device (radiator unit) 104.

The heat pump heating device 100 is a device which, by radiating the heat generated by the heat pump 101 from the heating device 104 via the heat exchanger 102, maintains the temperature of a room equipped with the heating device 104 to within a predetermined temperature range including a predetermined set temperature.

The first power meter 6 measures the power consumption of electronic devices (that is, an electric load 5 and a heating system control unit 8) other than the heat pump heating device 100. In other words, the heating system control unit 8 and the electric load 5 operate off power supplied from the energy supplier 4 via the first power grid. On the other hand, the second power meter 7 measures the power consumption of components of the heat pump heating device 100, such as the compressor, pump, and fan (not shown in the Drawings). In other words, the components of the heat pump heating device 100 operate off power supplied from the energy supplier 4 via the second power grid.

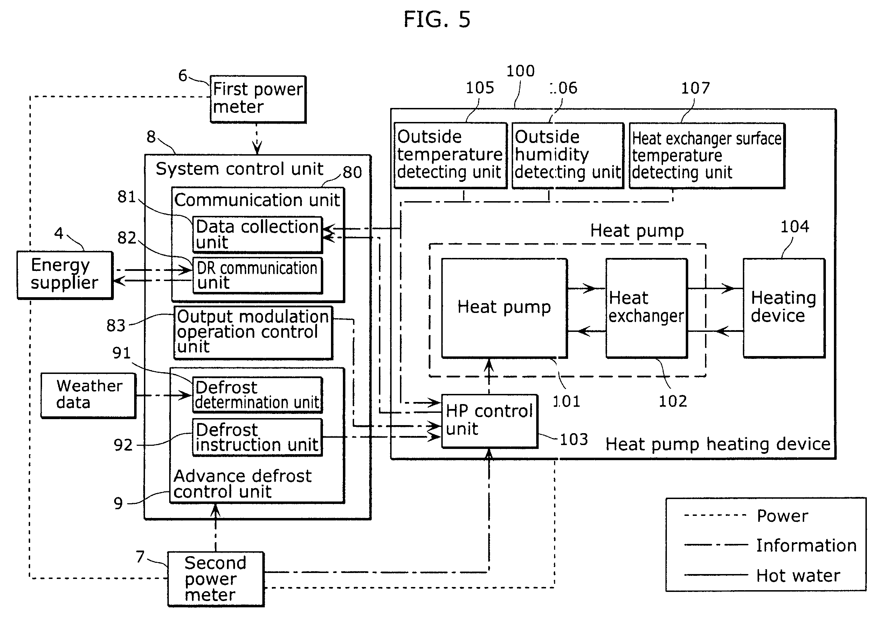

The heating system control unit 8 is functionally capable of communicating with the energy supplier 4 and administering control commands to the heat pump heating device 100. For example, the heating system control unit 8 includes an output modulation operation control unit 83 (shown in FIG. 5) and controls operation of the heat pump heating device 100 to modulate power consumption by the heat pump 101 during the DR period.

The energy supplier 4 is a company which delivers electricity or gas to individual homes and, when the energy supplier 4 wishes to modulate the use of power by a given home, can reduce the consumption of power supplied to the individual homes via the second power grid by transmitting a DR signal.

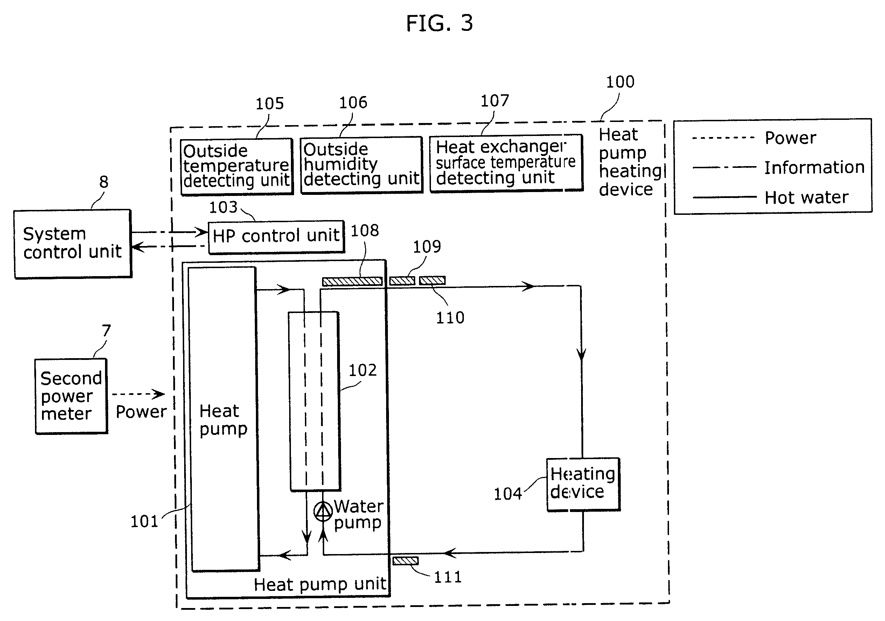

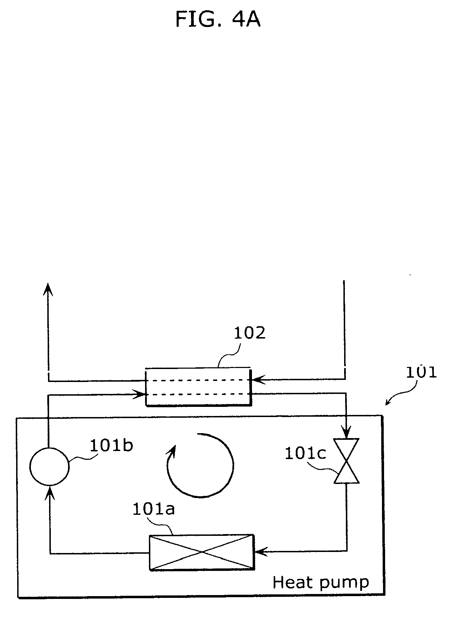

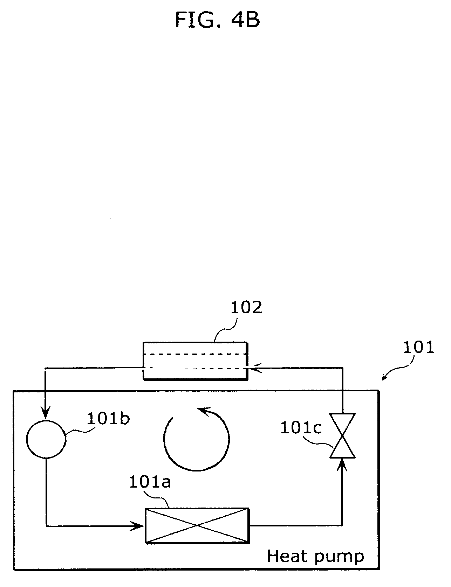

FIG. 3 is a block diagram showing the heat pump heating device 100 according to the first embodiment in detail. FIG. 4A and FIG. 4B show the configuration of the heat pump 101 in detail.

The heat pump heating device 100 shown in FIG. 3 includes the heat pump 101, the heat exchanger 102, the heating device 104, the HP control unit 103, an outside temperature detecting unit 105, an outside humidity detecting unit 106, a heat exchanger surface temperature detecting unit 107, a heater 108, an outlet heated water temperature detecting unit 109, a flow rate detecting unit 110, and an inlet water temperature detecting unit 111. Moreover, the combination of the heat pump 101 and the heat exchanger 102 is referred to as the heat pump unit.

The heat pump 101 is an air-source heat pump which compresses a refrigerant into a high temperature-high pressure state. More specifically, as is shown in FIG. 4A, the heat pump 101 includes the heat exchanger (air heat exchanger) 101a which facilitates heat exchange between outside air and low temperature, low pressure liquid refrigerant to generate a low temperature, low pressure vaporized refrigerant, a motor-driven compressor 101b which compresses the low temperature, low pressure vaporized refrigerant into a high temperature, high pressure vaporized refrigerant, an expansion valve 101c which reduces the pressure of the low temperature, high pressure vaporized refrigerant to generate a low temperature, low pressure liquid refrigerant, and a fan (not shown in the Drawings) to accelerate the heat conversion between the refrigerant in the evaporator and the outside air, for example.

The high temperature, high pressure vaporized refrigerant output from the compressor 101b transfers heat in the heat exchanger 102 between water (thermal storage medium) and enters the expansion valve 101c as a low temperature, high pressure liquid refrigerant. In other words, the refrigerant in the heat pump 101 circulates through the heat pump cycle shown in FIG. 4A in a clock-wise direction. The refrigerant in the heat pump 101 is, for example, R-410A. As a result of a property of this refrigerant, the temperature at the exit of the water cycle of the heat exchanger 102 peaks at 55 degrees Celsius, so the upper temperature limit of the heating temperature setting is set to 55 degrees Celsius.

The heat exchanger (water heat exchanger) 102 facilitates heat exchange between the high temperature, high pressure refrigerant exiting the heat pump 101 and the secondary side of the water cycle filled with water (that is, the water cycling between the heat exchanger 102 and the heating device 104). Moreover, as FIG. 3 shows, a water pump is provided along the channel in which water flows from the heating device 104 to the heat exchanger 102. The water pump adjusts the amount of water flowing into the heat exchanger 102.

The heating device 104 is a device for heating the inside of a home, such as a radiator or floor heater which radiates heat energy in a room via a radiator panel, or an air conditioner which blows hot air heated by the heat exchanger 102. It should be noted that a specific example of the heating device 104 is not limited to these examples, but corresponds to any device having a radiator unit which radiates heat generated by the heat pump 101 to a target.

The outside temperature detecting unit 105 detects the outside temperature, and more specifically, detects the outside temperature in the vicinity in which the heat pump heating device 100 is installed. The outside humidity detecting unit 106 detects the outside humidity, and more specifically, detects the outside humidity in the vicinity in which the heat pump heating device 100 is installed. The heat exchanger surface temperature detecting unit 107 detects the surface temperature of the heat exchanger 101a. Moreover, the heat pump heating device 100 may include a refrigerant temperature detecting unit (not shown in the Drawings) for detecting the temperature of the refrigerant circulating in the heat pump 101.

It should be noted that the outside temperature detecting unit 105, the outside humidity detecting unit 106, the heat exchanger surface temperature detecting unit 107, and the refrigerant temperature detecting unit are not intended to be limited to a specific configuration. For example, a general configuration which can measure temperature may be chosen to suit the target to be measured. Examples include a thermocouple, a resistance thermometer, a thermistor, and a bimetallic thermometer.

The HP control unit 103 controls the generation of heat by controlling the compressor 101b and the expansion valve 101c in the heat pump 101. The HP control unit 103 can operate the heat pump 101 in a heating mode, a defrost mode, or an output modulation mode.

The heating mode is a mode of operation for generating heat to be radiated by the heating device 104, and is ran by circulating the refrigerant in the heat pump 101 as is shown in FIG. 4A. More specifically, during normal operation (a time period other than the DR period), the HP control unit 103 set to the heating mode, for example, controls operation of the heat pump 101 according to operation conditions set by the user. On the other hand, during the DR period, instructions from the heating system control unit 8 have priority, and the HP control unit 103 controls operation of the heat pump 101 in accordance with these instructions.

The defrost mode is a mode of operation for removing frost build-up on the surface of the heat exchanger 101a, and is ran by circulating the refrigerant in the heat pump 101 as is shown in FIG. 4B (in a direction opposite that of FIG. 4A). In other words, frost can be melted from the surface of the heat exchanger 101a by supplying the high temperature, high pressure vaporized refrigerant generated by the compressor 101b to the heat exchanger 101a.

It should be noted that the method of operating the heat pump 101 in the defrost mode is not limited to the example shown in FIG. 4B. For example, since it is possible to supply the high pressure refrigerant to the heat exchanger 101a by circulating the refrigerant in the direction shown in FIG. 4A and decreasing the expansion rate in the expansion valve 101c to a value lower than that in the heating mode, frost can be melted off.

The output modulation mode is a mode of operation of the heat pump 101 used during the DR period that reduces the output of the heat pump 101 to a value lower than that of the heating mode. For example, the heat pump 101 in the heating mode operates at normal rated power (generates a first amount of heat per unit time), while the heat pump 101 in the output modulation mode operates at half the normal rated power or less (generates a second amount of heat per unit time).

Moreover, the HP control unit 103 determines the switching between the heating mode and the defrost mode using the outside temperature measured by the outside temperature detecting unit 105 and the heat exchanger surface temperature measured by the heat exchanger surface temperature detecting unit 107. The HP control unit 103 according to the first embodiment switches the heat pump 101 mode of operation from the heating mode to the defrost mode when the outside temperature is 5 degrees Celsius or less and the surface temperature of the heat exchanger is -10 degrees Celsius or less (first defrost condition). On the other hand, the HP control unit 103 switches the heat pump 101 mode of operation from the defrost mode to the heating mode when the surface temperature of the heat exchanger is 10 degrees Celsius or more (defrost complete condition).

Moreover, the HP control unit 103 receives a defrost instruction notice from an advance defrost control unit 9 located in the system control unit 8, to be described later. When the HP control unit 103 receives the defrost instruction notice, it switches the heat pump 101 mode of operation from the heating mode to the defrost mode in accordance with the instructions from the system control unit 8 (in other words, in accordance with the information in the defrost instruction notice).

Moreover, the HP control unit 103 notifies a data collection unit 81 located in the system control unit 8 of the current mode of operation. The timing of the notification is not particularly limited, and may be performed, for example, at a point in time at which the mode of operation is switched, at a point in time at which the notification is requested from the system control unit 8, or at a predetermined point in time (for example, every day at 00:00).

Moreover, the HP control unit 103 may calculate and transmit to the system control unit 8 the output of the heat pump 101 by multiplying (i) a difference between the temperature of the hot water output from the heat exchanger 102 measured by the outlet heated water temperature detecting unit 109 shown in FIG. 3 (outlet heated water temperature) and the temperature of the water input into the heat exchanger 102 measured by the inlet water temperature detecting unit 111 (inlet water temperature) by (ii) a flow rate measured by the flow rate detecting unit 110 in the channel between the heat exchanger 102 and the heating device 104.

The heater 108 is capable of further heating the heated water exiting the heat exchanger 102, and as FIG. 3 shows, is installed along the channel in which water flows from the heat exchanger 102 to the heating device 104. The heater 108 is not intended to be limited to a specific configuration. For example, the heater 109 may be an electrically-heated wire.

With the heat pump heating device 100 having the above configuration, the outlet heated water temperature, which is the temperature of the heated water exiting the heat exchanger 102, is set by the user, and operation conditions for the heat pump 101 are determined in order to achieve this set outlet heated water temperature. However, the heat pump 101 requires some time to reach a stable amount of generated heat after being turned on, and has trouble keeping up with the large settings changes in real time.

For this reason, when the outlet heated water temperature detected by the outlet heated water temperature detecting unit 109 (the measured outlet heated water temperature) is less than the temperature set by the user (the set outlet heated water temperature), the heater 108 adds heats to approximate the measured outlet heated water temperature of heated water exiting the heat exchanger 102 to the set outlet heated water temperature.

Moreover, when the heat pump 101 mode is operating in the defrost mode, the outlet heated water temperature as well as the room temperature decrease since the heat pump 101 circuit is switched to defrosting. As such, the heater 108 can heat the heated water output from the heat exchanger 102 while the heat pump 101 is operating in the defrost mode to prevent a loss of user comfort.

FIG. 5 is a block diagram showing the system control unit 8 of the heat pump heating system according to the first embodiment in detail. The system control unit 8 shown in FIG. 5 includes a communication unit 80 which includes a data collection unit 81 and a DR communication unit 82, the output modulation operation control unit 83, and the advance defrost control unit 9 which includes a defrost determination unit 91 and a defrost instruction unit 92.

It should be noted that the system control unit 8 shown in FIG. 2 and FIG. 5 is configured to be structurally separate from the heat pump heating device 100. However, the present invention is not limited to this configuration. In other words, the system control unit 8 may be configured to be combined with the heat pump heating device 100. In this case, the system control unit 8 may be positioned next to the HP control unit 103 within the heat pump heating device 100.

The data collection unit 81 collects various data, such as the various temperatures and the like detected by the outside temperature detecting unit 105, the outside humidity detecting unit 106, and the heat exchanger surface temperature detecting unit 107, as well as the various power consumption amounts measured by the first and second power meters 6 and 7. Moreover, the data collection unit 81 receives a notice of the current heat pump 101 mode of operation from the HP control unit 103.

The DR communication unit 82 receives the DR signal from the energy supplier 4. Moreover, the DR communication unit 82 notifies the energy supplier 4 of the modulation and restarting of the supply of power to the heat pump heating device 100 via the second power grid. It should be noted that the DR communication unit 82 may communicate with the energy supplier 4 via power line communication (PLC), or may communicate with the energy supplier 4 via a different method, such as the internet. Moreover, the DR communication unit 82 notifies the advance defrost control unit 9 as well with the DR signal.

The DR signal is transmitted from the energy supplier 4 prior to the start of the DR period for modulating power use by each home (from 0.5 to 12 hours in advance, for example). In this case. information specifying the DR period start time and end time is included in the DR signal. In the first embodiment, the information is "DR period start time: 18:00; DR period end time: 20:00".

Here, "information specifying the DR period start time and end time" is not limited to a specific example, and may be information specifying actual start and end times (such as "DR period start time: 18:00; DR period end time: 20:00") or information indicating the start time and length of the DR period (such as "DR period start time: 18:00; DR period length: 2 hours").

The output modulation operation control unit 83 switches the operation of the HP control unit 103 between DR period operation and non-DR period operation. In other words, in a time period that is not the DR period, the output modulation operation control unit 83 causes the HP control unit 103 to control the operation of the heat pump heating device 100 to achieve the outlet heated water temperature set by the user. On the other hand, when the DR communication unit 82 receives the DR signal, the output modulation operation control unit 83 determines operation conditions for the operation of the heat pump heating device 100 during the DR period, and causes the HP control unit 103 to control the operation of the heat pump heating device 100 according to the determined operation conditions. In this case, the instructions from the system control unit 8 (the output modulation operation control unit 83) have priority over the HP control unit 103.

These operation conditions include, for example, the temperature (outlet heated water temperature) setting of the hot water output from the heat exchanger 102 and the operating state of the heater 108. The output modulation operation control unit 83 determines the DR period outlet heated water temperature for the heat pump 101 that, for example, make the heat pump 101 generate an amount of heat (the second amount of heat) that is less than the amount of heat generated per unit time by the heat pump 101 in a period other than the DR period (the first amount of heat).

More specifically, the output modulation operation control unit 83, for example, changes the outlet heated water temperature of the heat exchanger 102 from the first temperature setting (55 degrees Celsius, for example) to the second temperature setting that is lower than the first temperature (41 degrees Celsius, for example) to decrease the amount of heat generated per unit time by the heat pump 101 from the first amount of heat to the second amount of heat. Moreover, in order to reduce power consumption, the output modulation operation control unit 83 modulates (or prohibits) operation of the heater 108. Here, the heated water exiting the heat exchanger 102 (heated water output) is assumed to a constant amount. Processes for determining these operation conditions are performed, for example, when the DR signal is received by the DR communication unit 82 from the energy supplier 4, but the process of determination is not limited to this.

The advance defrost control unit 9 refers to the DR period start time included in the DR signal received by the DR communication unit 82 and determines the necessity of performing defrosting before the DR period start time (hereinafter also referred to as advance defrosting). When the advance defrost control unit 9 determines that advance defrosting is required, the advance defrost control unit 9 then notifies the HP control unit 103 with a defrost instruction. The advance defrost control unit 9 includes the defrost determination unit 91 and the defrost instruction unit 92.

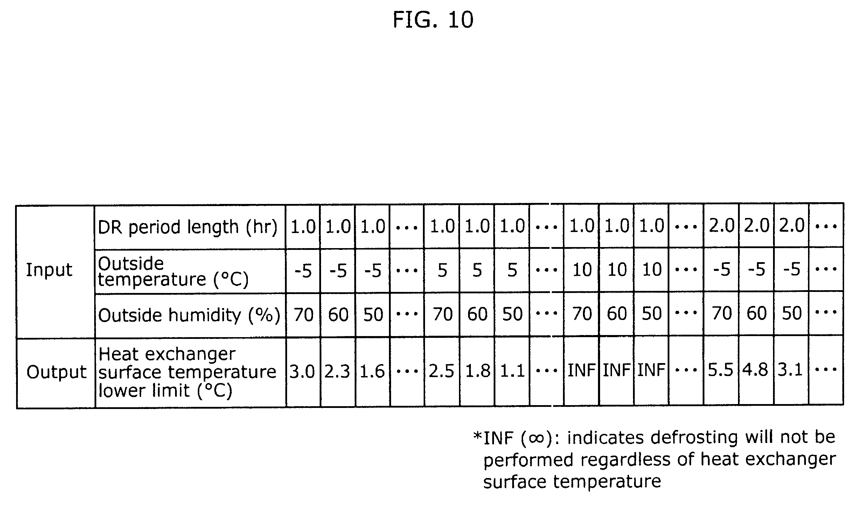

The defrost determination unit 91 determines whether switching the heat pump 101 mode of operation to the defrost mode is required or not in a given period occurring within a period starting when the DR signal is obtained and ending at the start time of the DR period (in other words, determine whether advance defrosting is required or not). More specifically, based on the information collected by the data collection unit 81 and the advance defrost table such as the one shown in FIG. 10, the defrost determination unit 91 determines a second defrost condition for determining the necessity of advance defrosting. Then, when the current state of the heat pump 101 satisfies the second defrost condition, the defrost determination unit 91 determines that advance defrosting is required. It should be noted that the method for determining the second defrost condition will be discussed in detail later on, but the second defrost condition is at least a condition that is more easily satisfied than the first defrost condition.

When the defrost determination unit 91 determines that advance defrosting is required, the defrost instruction unit 92 transmits a defrost instruction notice to the HP control unit 103 located in the heat pump heating device 100.

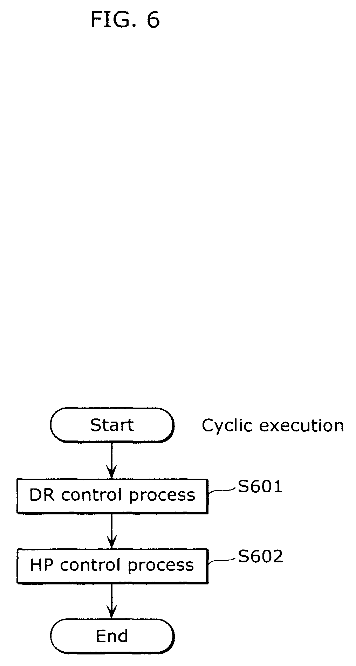

Next, the control method of the heat pump heating system according to the first embodiment will be explained with reference to FIG. 6 through FIG. 9.

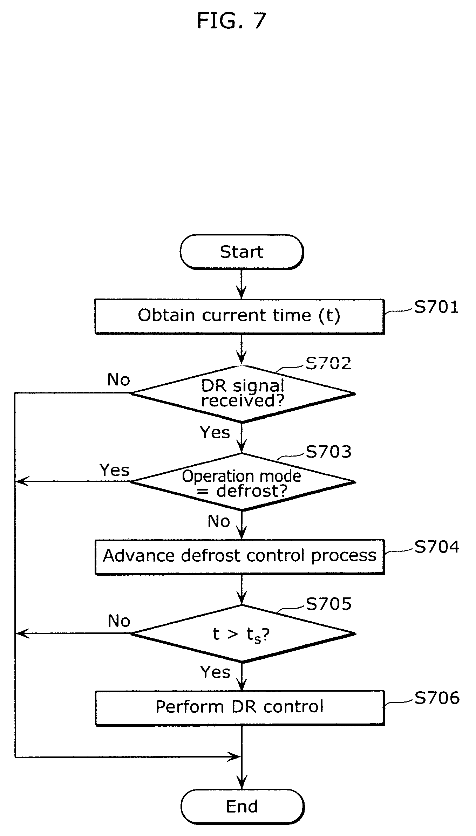

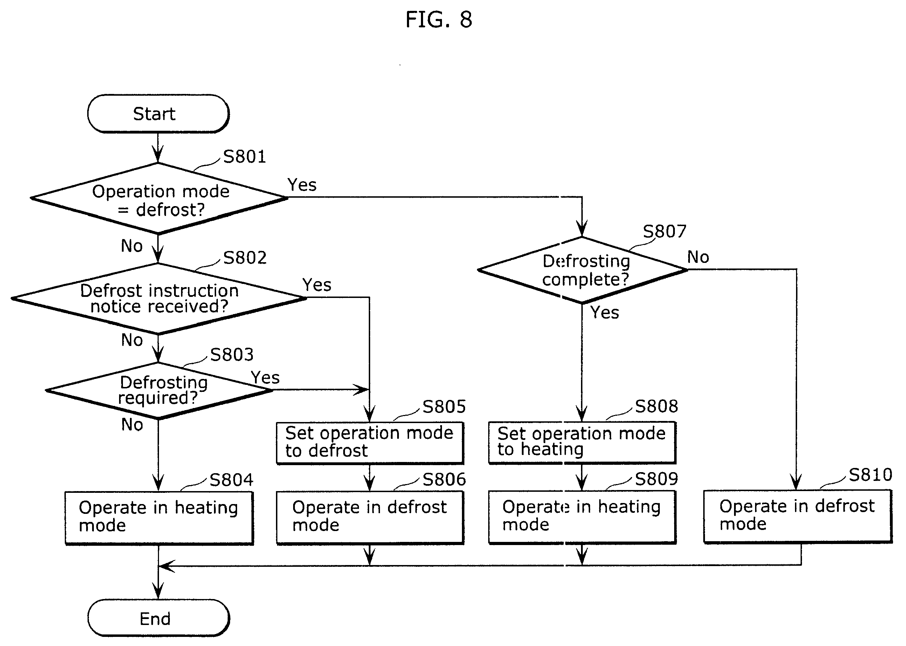

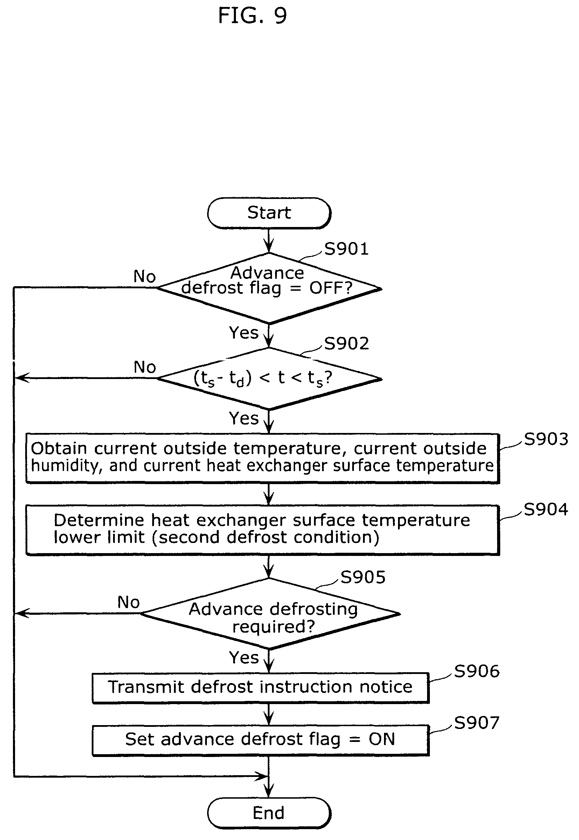

FIG. 6 is a flow chart outlining the control processes performed by heat pump heating system according to the first embodiment. FIG. 7 is a flow chart of the DR control process shown in FIG. 6 (S601 in FIG. 6). FIG. 8 is a flow chart of the HP control process shown in FIG. 6 (S602 in FIG. 6). FIG. 9 is a flow chart of the advance defrost control process shown in FIG. 7 (S704 in FIG. 7).

First, FIG. 6 and FIG. 7 will be explained. As FIG. 6 shows, the heat pump control process performs the DR control process (S601) and the HP control process (S602) cyclically (for example, every minute). First, the system control unit 8 performs the DR control process (S601). Once the DR control process is complete, the HP control unit 103 performs the HP control process (S602).

FIG. 7 shows the DR control process shown in FIG. 6 (S601) in detail. The system control unit 8 first obtains the current time t (S701). Next, the system control unit 8 determines whether the DR signal from the energy supplier 4 has been received by the DR communication unit 82 (S702). When the DR signal has not been received (no in S702), the system control unit 8 ends the DR control process.

When the DR signal has already been received by the DR communication unit 82 (yes in S702), the data collection unit 81 refers to the current mode of operation transmitted from the HP control unit 103 (S703). When the current mode of operation is the defrost mode (yes in S703), the system control unit 8 ends the DR control process.

On the other hand, when the current mode of operation is not the defrost mode (no in S703), the system control unit 8 causes the advance defrost control unit 9 to perform an advance defrost control process (to be described later) (S704). In the advance defrost control process, the advance defrost control unit 9 determines whether defrosting before the start of the DR period (advance defrosting) is required. When the advance defrost control unit 9 determines that advance defrosting is required, the advance defrost control unit 9 transmits the defrost instruction notice to the HP control unit 103. When the advance defrost control unit 9 determines that advance frosting is not required, the heat pump 101 continues operation as per instruction by the HP control unit 103, without performing the advance defrosting (in other words, the defrost instruction notice is not transmitted).

When the advance defrost control process is complete, the data collection unit 81 determines whether the obtained current time t is past the DR period start time ts or not (S705). When the current time t is not past the DR period start time ts (no in S705), the system control unit 8 ends the DR control process. On the other hand, when the current time t is past the DR period start time (yes in S705), by causing the output modulation operation control unit 83 to perform the DR control, the system control unit 8 transmits a signal to the HP control unit 103 for changing the outlet heated water temperature of the heat exchanger 102 from the current 55 degrees Celsius (first temperature setting) to 41 degrees Celsius (second temperature setting) (in other words, a signal which switches the mode of operation from the heating mode to the output modulation mode) (S706). Afterward, the system control unit 8 ends the DR control process.

FIG. 8 shows the HP control process shown in FIG. 6 (S602) in detail. The HP control unit 103 first confirms whether the heat pump 101 current mode of operation is the defrost mode or not (S801).

When the current mode of operation is not the defrost mode (no in S801), this means that the heat pump 101 is already operating in the heating mode (heating operation). In this case, the HP control unit 103 confirms whether it has received the defrost instruction notice from the defrost instruction unit 92 located in the advance defrost control unit 9 or not (S802).

When the HP control unit 103 has not received the defrost instruction notice (no in S802), the HP control unit 103 refers to the outside temperature measured by the outside temperature detecting unit 105 and the surface temperature of the heat exchanger measured by the heat exchanger surface temperature detecting unit 107, and determines whether the current state satisfies the first defrost condition or not (S803). It should be noted that the first defrost condition according to the first embodiment is, for example, that the outside temperature is 5 degrees Celsius or less and the heat exchanger surface temperature is -10 degrees Celsius or less.

When the current state satisfies the first defrost condition (yes in S803), the HP control unit 103 sets the heat pump 101 mode of operation to the defrost mode (S805) and operates the heat pump 101 in the defrost mode (S806). On the other hand, when the current state does not satisfy the first defrost condition (no in S803), the HP control unit 103 continues operating the heat pump 101 in the heating mode (S804).

Moreover, when the HP control unit 103 has received the defrost instruction notice (yes in S802), the HP control unit 103 sets the heat pump 101 mode of operation to the defrost mode (S805) and operates the heat pump 101 in the defrost mode (S806).

However, when the current mode of operation is the defrost mode (yes in S801), this means that the heat pump 101 is already operating in the defrost mode (is defrosting). In this case, the HP control unit 103 refers to the heat exchanger surface temperature measured by the heat exchanger surface temperature detecting unit 107 and determines whether or not the surface temperature satisfies the defrost complete condition (S807). The defrost complete condition according to the first embodiment is, for example, that the heat exchanger surface temperature is 10 degrees Celsius or higher.

When the defrost complete condition is satisfied (yes in S807), the HP control unit 103 sets the heat pump 101 mode of operation to the heating mode (S808) and operates the heat pump 101 in the heating mode (S809). On the other hand, when the defrost complete condition is not satisfied (no in S807), the HP control unit 103 continues operating the heat pump 101 in the defrost mode (S810).

This completes the processes shown in FIG. 6. The processes are repeated after a given amount of time has elapsed.

Next, the advance defrost control process shown in FIG. 9 will be described. As previously described, the system control unit 8 causes the advance defrost control unit 9 to perform the advance defrost control process shown in step S704 in FIG. 7.

First, the advance defrost control unit 9 confirms the set value of the advance defrost flag (S901). The advance defrost flag indicates whether advance defrosting was performed or not between the time the DR signal was received and the current time (in other words, whether the defrost instruction notice was sent in step S906 or not). More specifically, the advance defrost flag is set to ON when advance defrosting has been performed, and set to OFF when advance defrosting has yet to be performed.

When the advance defrost flag is set to ON (no in S901), the advance defrost control unit 9 ends the advance defrost control process. However, when the advance defrost flag is set to OFF, the advance defrost control unit 9 determines whether or not the current time t is past the advance defrost start time (ts - td) and before the DR period start time ts (S902).

The advance defrost start time (ts - td) is a point in time calculated by subtracting an amount of time td required for defrosting from the DR period start time ts. In the heat pump heating system according to the first embodiment, since the amount of time required for defrosting is 15 minutes, the advance defrost start time (ts - td) is set, with some allowance, to be 20 minutes before the DR period start time (in other words, td = 20 minutes).

Moreover, in the first embodiment, since the start DR period start time ts is 18:00, the advance defrost start time (ts - td) is set to be 17:40. When the current time t is not past the advance defrost start time (ts - td) or is past the DR period start time ts (no in S902), the advance defrost control unit 9 ends the advance defrost control process.

On the other hand, when the current time t is past the advance defrost start time (ts - td) and is before the DR period start time ts (yes in S902), the advance defrost control unit 9 collects, via the data collection unit 81, the current outside temperature measured by the outside temperature detecting unit 105, the current outside humidity measured by the outside humidity detecting unit 106, and the surface temperature of the heat exchanger measured by the heat exchanger surface temperature detecting unit 107 (S903). Moreover, the advance defrost control unit 9 obtains the length of the DR period from the DR signal received by the DR communication unit 82.

Next, the advance defrost control unit 9 determines, based on the information obtained in step S903 and the advance defrost table shown in FIG. 10, the second defrost condition for determining the necessity of performing advance defrosting (S904).

It should be noted that the second defrost condition according to the first embodiment includes the heat exchanger 101a surface temperature lower limit. In other words, the second defrost condition according to the first embodiment is, for example, the temperature in degrees Celsius of the lower limit of the heat exchanger surface temperature determined in S904 or less.

Moreover, the second defrost condition is, for example, only effective within a given period starting when the DR signal is obtained and ending at the start time of the DR period (more specifically, within a time period between the advance defrost start time and the DR period start time).

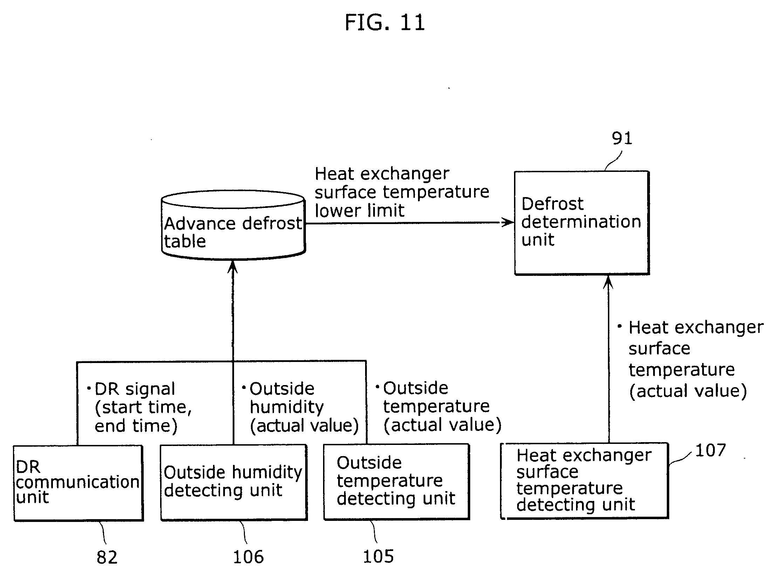

Next, operations performed by the defrost determination unit 91 (steps S904 and S905 in FIG. 9) will be described in detail with reference to FIG. 10 and FIG. 11. FIG. 10 is an example of an advance defrost table according to the first embodiment. FIG. 11 shows the required information for determining the heat exchanger surface temperature lower limit according to the first embodiment.

The advance defrost table shown in FIG. 10 holds DR period lengths (first row), outside temperatures (second row), and outside humidity values (third row) in association with respective heat exchanger surface temperature lower limits (fourth row). This advance defrost table holds, for example, results of experiments where the DR period length, outside temperature at the DR period start time, and outside humidity at the DR period start time are fixed, and tested, while the heat pump 101 was operating in the output modulation mode, at what temperature, in degrees Celsius, of the surface of the heat exchanger at the DR period start time did the state of the heat pump 101 in the DR period pass the first defrost condition (in other words, tested at what temperature did defrosting become necessary during the DR period).

In other words, as the first column shows in the advance defrost table shown in FIG. 10, when the heat pump 101 is made to operate in the output modulation mode when the DR period length is 1 hour, the outside temperature at the DR period start time is -5 degrees Celsius, and the outside humidity at the DR period start time is 70%, a heat exchanger surface temperature of 3 degrees Celsius or below at the DR period start time indicates that the state of the heat pump 101 in the DR period satisfies the first defrost condition.

On the other hand, columns in which "INF" is written in the heat exchanger surface temperature lower limit row indicate that the state of the heat pump 101 in the DR period will not satisfy the first defrost condition regardless of the heat exchanger surface temperature at the DR period start time when the heat pump 101 is made to operate in the output modulation mode under the conditions (DR period length, outside temperature, and outside humidity) shown in that column.

It should be noted that the heat exchanger surface temperature lower limit held in the advance defrost table shown in FIG. 10 (i) increases with DR period length, (ii) increases as the outside temperature approximate 0 degrees Celsius within a range of -5 to 5 degrees Celsius, and (iii) increases with outside humidity.

As FIG. 11 shows, the defrost determination unit 91 obtains, as input parameters, the current outside temperature measured by the outside temperature detecting unit 105, the current outside humidity measured by the outside humidity detecting unit 106, and the DR period length specified in the DR signal received by the DR communication unit 82, and obtains as an output value the heat exchanger surface temperature lower limit that corresponds with the obtained input parameters.

The defrost determination unit 91 then determines the necessity of advance defrosting based on the current heat exchanger surface temperature measured by the heat exchanger surface temperature detecting unit 107. In other words, when the heat exchanger surface temperature is equal to or less than the heat exchanger surface temperature lower limit obtained from the advance defrost table (the second defrost condition), the defrost determination unit 91 determines that advance defrosting is required.

However, the example of the advance defrost table shown in FIG. 10 is just one example, and is not intended to be limiting. For example, the advance defrost table shown in FIG. 10 is used for determining only the lower limit of the heat exchanger surface temperature (the second defrost condition), but the present invention is not limited to thereto. In other words, the defrost determination unit 91 may determine the second defrost condition in part or entirety according to the method described above.

Lastly, when the second defrost condition is satisfied by the end of the DR period (yes in S905), the defrost instruction unit 92 determines that advance defrosting is required and transmits the defrost instruction notice to the HP control unit 103 (S906), sets the advance defrost flag ON (S907), and completes the advance defrosting process.

As described above, the defrost determination unit 91 determines the second condition based on the current state of the of the heat pump 101 and its surroundings (in other words, the outside atmosphere). Then, when the defrost determination unit 91 determines that the second defrost condition will be satisfied by the DR period start time ts, it determines that advance defrosting is required and transmits the defrost instruction notice to the HP control unit 103, and then ends the advance defrost control process. On the other hand, when the defrost determination unit 91 determines that the second defrost condition will not be satisfied by the DR period start time ts, it determines that advance defrosting is not required and ends the advance defrost control process.

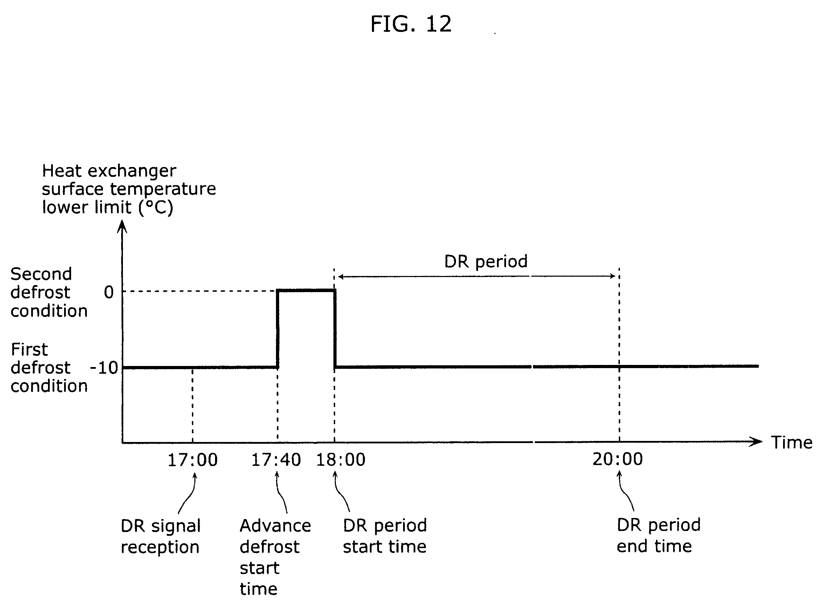

In other words, in the first embodiment, the defrost condition (the heat exchanger surface temperature lower limit) at each point in time looks like the drawing shown in FIG. 12. FIG. 12 shows an example of the shift in the heat exchanger surface temperature lower limit according to the first embodiment.

In the example shown in FIG. 12, the heat exchanger surface temperature lower limit before the DR signal is received (17:00) and after the end of the DR period (20:00) is -10 degrees Celsius. In other words, the defrost determination during these time periods is performed in accordance with the first defrost condition. On the other hand, the heat exchanger surface temperature lower limit from the start of the advance defrost control process of step S704 shown in FIG. 7 (17:40) until the DR period start time (18:00) is 0 degrees Celsius (an example of a value obtained from the advance defrost table). In other words, the defrost determination during this time period is performed in accordance with the second defrost condition.

Moreover, in the example shown in FIG. 12, the heat exchanger surface temperature lower limit in the period from the reception of the DR signal to the start of the advance defrost control process, as well as the in the DR period, is -10 degrees Celsius. In other words, the defrost determination during these time periods is performed in accordance with the first defrost condition. However, the heat exchanger surface temperature lower limits in these time periods are not limited to this example. For example, the heat exchanger surface temperature lower limit in the DR period may be set to a temperature lower than -10 degrees Celsius in order to make it more difficult for defrosting to be performed during the DR period.

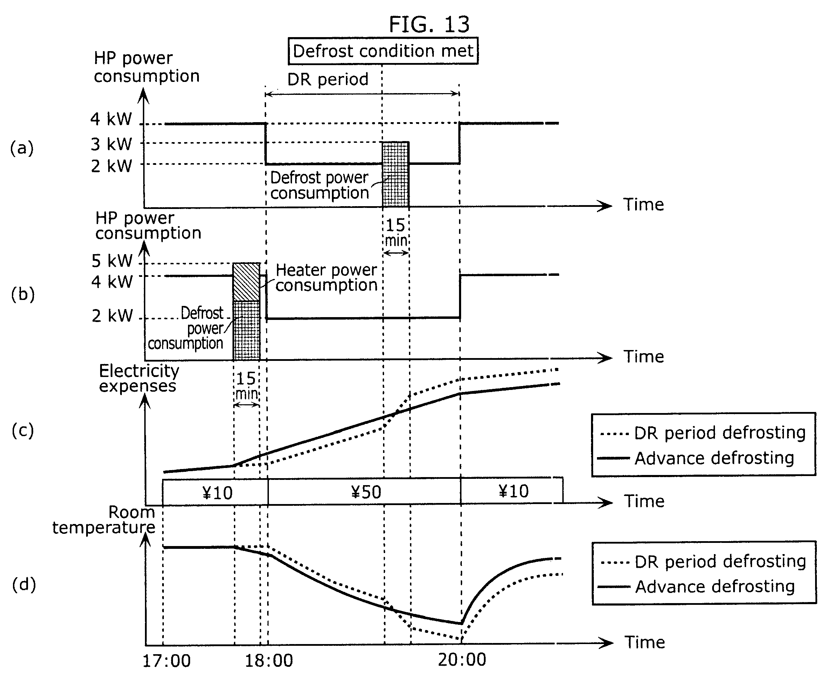

Next, an advantage of the first embodiment will be described with reference to FIG. 13. FIG. 13 (a) is an example of the power consumption (of the heat pump heating device 100) measured by the second power meter 7 when defrosting is performed during the DR period, without performing the advance defrost control process according to the first embodiment. FIG. 13 (b) is an example of the power consumption measured by the second power meter 7 when it is determined in the advance defrost control process (S704 in FIG. 7) that the state of the heat pump 101 satisfies the second defrost condition and advance defrosting is to be performed.

As FIG. 13 (a) and (b) show, in time periods outside of the DR period (in other words, time periods in which the outlet heated water temperature setting is high), the power consumption (excluding when defrosting) of the heat pump heating device 100 operating in the heating mode is 4 kW. Moreover, in the DR period (in other words, a time period in which the outlet heated water temperature setting is low), the power consumption (excluding when defrosting) of the heat pump heating device 100 operating in the heating mode is 2 kW.

Next, in the DR period shown in FIG. 13 (a), the power consumption of the heat pump heating device 100 operating in the defrost mode is only the 3 kW that the heat pump 101 consumes since the operation of the heater 108 is modulated. Furthermore, before the DR period in FIG. 13 (b), the power consumption of the heat pump heating device 100 operating in the defrost mode totals 5 kW-the 2 kW consumed by the heater 108 and the 3 kW consumed by the heat pump 101-since the operation of the heater 108 is not modulated. Moreover, in both FIG. 13 (a) and (b), defrosting takes 15 minutes.

First, quantitative efficiency with respect to electrical costs is calculated. For example, as FIG. 13 (c) shows, the electrical cost per is 50 yen per kW from 18:00 to 20:00 and 10 yen per kW at all other times.

The total cost of electricity from 17:00 to 21:00 in FIG. 13 (a) (shown as the dashed line in FIG. 13 (c)) is 292.5 yen since the cost between 17:00 and 18:00 is 40 yen, 212.5 yen between 18:00 and 20:00, and 40 yen between 20:00 and 21:00. On the other hand, the total cost of electricity from 17:00 to 21:00 in FIG. 13 (b) (shown as the solid line in FIG. 13 (c)) is 282.5 yen since the cost between 17:00 and 18:00 is 42.5 yen, 200 yen between 18:00 and 20:00, and 40 yen between 20:00 and 21:00. In other words, the difference in electrical cost is 10 yen when defrosting is performed during the DR period like in the case shown in FIG. 13 (a) and advance defrosting is performed before the DR period start time like in the case shown in FIG. 13 (b).

Individually examining the time periods in FIG. 13 (c) in detail reveals that the cost of electricity up until the DR period start time in the case shown in FIG. 13 (b) in which advance defrosting is performed is higher than in the case shown in FIG. 13 (a) in which defrosting is performed during the DR period since power consumption is necessary for both the heat pump 101 operating in the defrost mode and the heater 108 while the advance defrosting is being performed in the case shown in FIG. 13 (b). However, the amount of increase (the incline of the solid line in FIG. 13 (c) is low since defrosting is being performed using the comparatively low-cost electricity provided outside of the DR period.

On the other hand, when defrosting is performed during the DR period like in the case shown in FIG. 13 (a), the cost in accordance with the defrosting exceeds the cost when advance defrosting is performed like in the case shown in FIG. 13 (b) since defrosting is performed during the high electrical cost DR period. In this way, when it is determined in the advance defrost control process (S704 in FIG. 7) that the second defrost condition is satisfied, electricity costs can be reduced by performing the defrosting before the DR period.

Next, an advantage regarding comfort will be described with reference to FIG. 13 (d). As FIG. 13 (d) shows, when advance defrosting is performed like in the case shown in FIG. 13 (b) (the solid line shown in FIG. 13 (d)), the temperature of the room gradually decreases since the mode of operation of the heat pump 101 is switched to the defrost mode before the DR period start time and heat supplied from the heat pump 101 to the heating device 104 is temporarily stopped. However, since the heater 108 is being used during this period, the rate of decrease in room temperature is relatively low (as indicated by the slope of the solid line shown in FIG. 13 (d)).

On the other hand, when defrosting is performed during the DR period like the case shown in FIG. 13 (a), the mode of operation of the heat pump 101 is switched to the defrost mode in the DR period, and heat ceases to be supplied from the heat pump 101 to the heating device 104. In this case, use of the heater 108 by the HP control unit 103 is modulated (prohibited) during the DR period, so the rate of decrease in room temperature exceeds that of when advance defrosting is performed. Consequently, the lowest temperature, which greatly effects comfort, is lower than when advance defrosting is performed like in the case shown in FIG. 13 (b). In this way, when it is determined in the advance defrost control process (S704 in FIG. 7) that the second defrost condition is satisfied, a reduction in the level of comfort can be improved by performing the defrosting before the DR period.

Moreover, when the time period at which the electric load peaks is set to be the DR period, it is desirable that power consumption is reduced as much as possible to stabilize the power grid and undesirable to unnecessarily consume power. In other words, the power consumed when defrosting is performed during the DR period in the case shown in FIG. 13 (a) is used to melt the frost formed on the heat exchanger 101a, and as such, can be said to be a waste of power as it does not contribute to heating the room.

However, when advance defrosting is performed like the case shown in FIG. 13 (b), the power consumed by the heat pump 101 during the DR period is used in entirety for heating the room. In this way, when it is determined in the advance defrost control process (S704 in FIG. 7) that the second defrost condition is satisfied, it is possible to efficiently consume power and contribute to the stabilization of the power grid by performing the defrosting before the DR period.

In this way, with the heat pump heating system control method according to the first embodiment, when the state of the heat pump 101 satisfies the second defrost condition in the advance defrost control process (S704 in FIG. 7) (in other words, when it is estimated that defrosting will be required during the peak time period), it is possible to avoid defrosting being performed during the peak time period by performing the defrosting before the peak time period. This is useful as an operation method which contributes to the stabilization of grid power due to the peak cut in the peak time period, an increase in the comfort level of the user, and a decrease in user electricity expenses. In other words, it is possible to realize an increased stabilization of the power grid by setting the DR period to the power peak time period.

It should be noted that in the first embodiment, an instantaneous value of the outside temperature and the heat exchanger surface temperature were used as the condition for the switching of the mode of operation of the heat pump 101, but the present invention is not limited to this example. For example, the condition may be a condition using a consecutive value or an average time of movement such as "the heat exchanger surface temperature remained at or below -10 degrees Celsius (or 0 degrees Celsius) for a given period of time (for example 3 minutes)".

Moreover, in the first embodiment, an example in which the heat exchanger surface temperature lower limit in the second defrost condition is determined using the length of the DR period, outside temperature, and outside humidity was used, but the present invention is not limited to this example. For example, the heat exchanger surface temperature lower limit may be determined using at least one of the length of the DR period, outside temperature, and outside humidity, or using other input parameters. Examples of other input parameters include an average value of the outside temperature in the DR period and a maximum value of the outside temperature in the DR period. It should be noted that the defrost determination unit 91 may obtain outside temperatures for future times (in this example temperatures corresponding to the DR period) from weather data like shown in FIG. 5.

Moreover, in the first embodiment, an example in which the heat exchanger surface temperature lower limit in the second defrost condition is adaptively determined in accordance with the heat pump 101 and the surrounding environment thereof at the time the advance defrost control process (S704 in FIG. 7) is performed was used, but the present invention is not limited to this example. For example, a predetermined, fixed value may be used. In other words, the heat exchanger surface temperature lower limit in the second defrost condition may be higher than the heat exchanger surface temperature lower limit in the first defrost condition. Stated again, the second defrost condition may be more easily satisfied than the first defrost condition.

Moreover, instead of the heat exchanger surface temperature, the temperature of the refrigerant flowing through the ducts may be used. Furthermore, the amount of frost build-up may be estimated using a combination of, for example, the heat exchanger surface temperature and the refrigerant temperature. In other words, the defrost determination unit 91 may set the refrigerant temperature lower limit in the second defrost condition to be higher than the refrigerant temperature lower limit in the first defrost condition. Furthermore, the amount of frost build-up may be measured directly using an imaging apparatus (camera) or the like.

Moreover, the defrost determination unit 91 according to the first embodiment uses the advance defrost table to determine the heat exchanger surface temperature lower limit, but the present invention is not limited to this example. For example, a model or equation representing the relationship between the outside temperature, the outside humidity, and the length of the DR period may be used.

Moreover, the timing that the advance defrost control unit 9 performs the advance defrost control process (the advance defrost start time) is not limited to directly before the DR period start time, but may be directly after the DR signal is received.

### (Second Embodiment)

Next, the control method of the heat pump heating system according to the second embodiment will be explained.

In the first embodiment, as previously described, when it is estimated that defrosting will be performed before the DR period end time, defrosting is avoided during the DR period by starting the defrosting 20 minutes before the DR period start time, as is shown in FIG. 13 (b).

In this case, room temperature decreases while defrosting is being performed since heat is not supplied from the heat pump 101 to the heating device 104. Moreover, directly after the mode of operation is switched from the defrost mode to the heating mode, the outlet heated water temperature of the heat exchanger 102 is below the set value. For this reason, as the case in FIG. 13 (b) shows, when defrosting is began directly before the DR period start time, the amount of time from the end of the defrosting to the DR period start time is short, and the DR period start time starts before the room temperature and the outlet heated water temperature of the heat exchanger 102 can return back to the set value. In this way, with the control method of the heat pump heating system according to the first embodiment, room temperature during the DR period becomes low and comfort is sacrificed.

### (Solution)

Next, an example of a method according to the second embodiment of controlling the start of the defrosting to occur even earlier than the advance defrost start time of the first embodiment will be given. It should be noted that the example will focus on the points of difference between the first and second embodiments. Since the flow of the heat pump heating system control method according to the second embodiment is the same as is shown in FIG. 6, details regarding common points with the first embodiment will be omitted.

In the first embodiment, the heat pump 101 mode of operation is switched to the defrost mode (at 17:40) so that the state of the heat pump satisfies the defrost complete condition (in other words, the defrosting ends) directly before the DR period start time (18:00). In contrast, with the second embodiment, controlling is performed so that advance defrosting is performed and the room temperature returns to the temperature prior to the advance defrosting before the DR period start time. More specifically, the start of the advance defrosting (the timing that the heat pump 101 mode of operation is switched to the defrost mode) is advanced from the DR period start time by an amount of time that it takes to perform defrosting and restore the room temperature.

### (Configuration and Operation)

The heat pump heating device 100 according to the second embodiment is the same as the heat pump heating device 100 according to the first embodiment shown in FIG. 2 through FIG. 5.

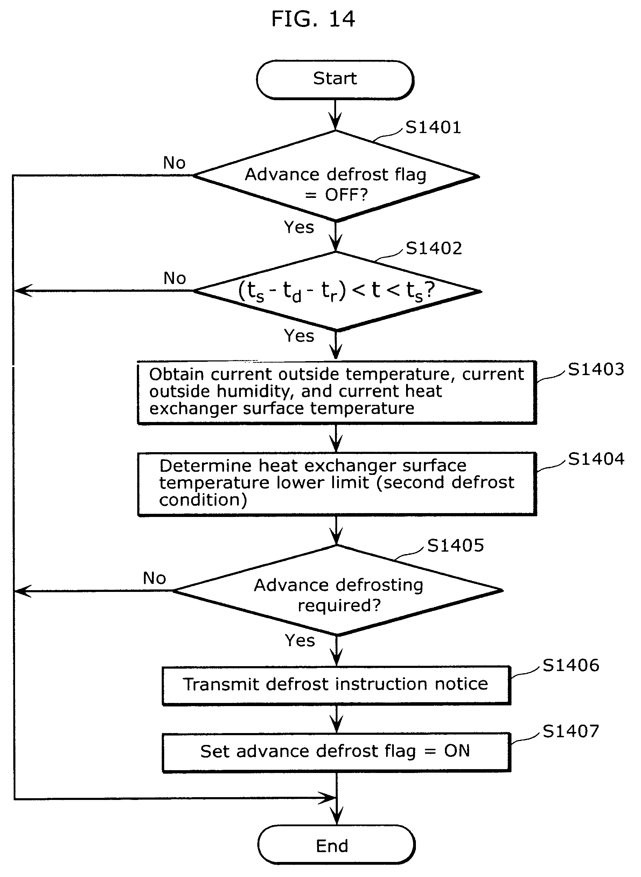

Next, an operation of the heat pump hot water supply and heating device 100 according to the second embodiment will be described. In the second embodiment, similar to the first embodiment shown in FIG. 6, the HP control process and the DR control process are performed cyclically, and the HP control process performed is the same as that of the first embodiment shown in FIG. 8. Next, the advance defrost control process according to the second embodiment is shown in FIG. 14.

In the advance defrost control process according to the second embodiment, an amount of time (60 minutes) calculated by summing an amount of time td required for defrosting (20 minutes) and an amount of time tr required for the room temperature and the outlet heated water temperature of the heat exchanger 102 to return to pre-defrosting levels (40 minutes) is subtracted from the DR period start time 18:00 (ts) to calculate the advance defrost start time, 17:00 (ts - td - tr). It should be noted that in the second embodiment, the amount of time (40 minutes) that it takes for the room temperature and the outlet heated water temperature of the heat exchanger 102 to return to pre-defrosting levels is set in advance, but this amount of time differs depending on the house and performance ability of the heat pump 101.

When the current time t is is past the advance defrost start time (ts - td - tr) and before the DR period start time ts (yes in S1402), the defrost determination unit 91 determines the second condition (the heat exchanger surface temperature lower limit) based on (i) the length of the DR period, current outside temperature, and current outside humidity, and (ii) the advance defrost table (S1403, S1404). Other processes are the same as those shown in FIG. 9 according to the first embodiment, and as such, descriptions thereof are omitted.

### (Advantageous Effects)

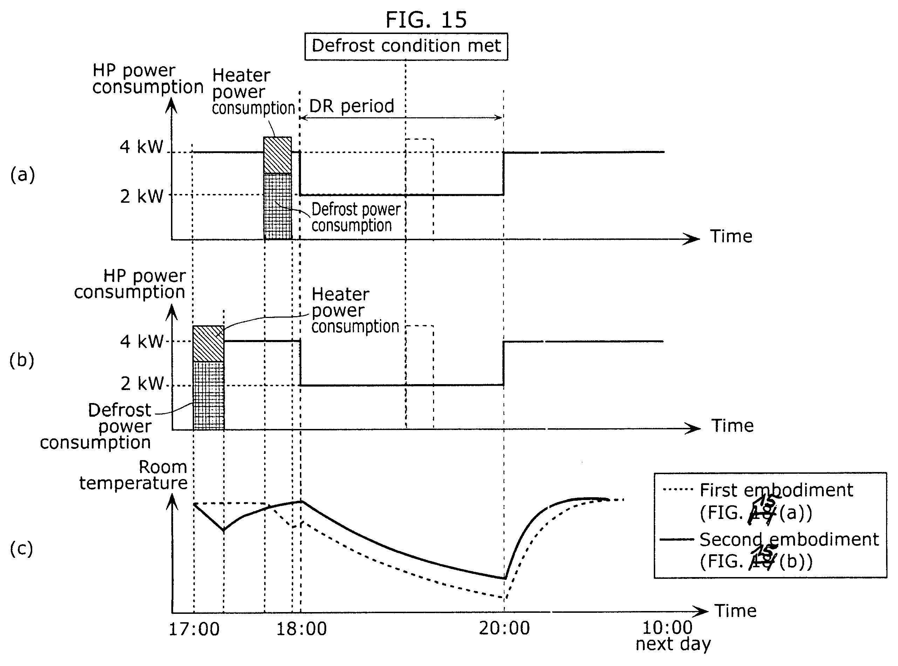

Next, the control method of the heat pump heating system according to the second embodiment will be explained with reference to FIG. 15. FIG. 15 (a) is an example of the power consumption calculated by the second power meter 7 when defrosting is performed using the heat pump heating system control method according to the first embodiment when it is determined that the second defrost condition is satisfied in the advance defrost control process (S704 in FIG. 7). In the heat pump heating system control method according to the first embodiment, the defrosting ends directly before the DR period start time ts.

FIG. 15 (b), similar to FIG. 15 (b), is an example of the power consumption calculated by the second power meter 7 when defrosting is performed using the heat pump heating system control method according to the second embodiment when it is determined that the second defrost condition is satisfied in the advance defrost control process (S704 in FIG. 7). With the heat pump heating system control method according to the second embodiment, advance defrosting is performed at the advance defrost start time (ts - td - tr) advanced from the DR period start time ts by an amount of time td required for defrosting and an amount of time tr required for the room temperature and the outlet heated water temperature of the heat exchanger 102 to return to pre-defrosting levels.

Moreover, FIG. 15 (c) compares the changes in room temperature occurring as a result of the operations shown in FIG. 15 (a) and (b). With the first embodiment shown in FIG. 15 (a), since defrosting is performed directly before the DR period start time ts, the room temperature is still low when time reaches the DR period start time ts (as is shown by the dashed line in FIG. 15 (c)). On the other hand, with the second embodiment shown in FIG. 15 (b), since sufficient time between the end of the defrosting and the DR period start time ts is reserved for the room temperature and the outlet heated water temperature of the heat exchanger 102 to return to pre-defrosting levels, compared to FIG. 15 (a), a higher room temperature can be maintained during the DR period (as is shown by the solid line in FIG. 15 (c)).

Moreover, with the second embodiment shown in FIG. 15 (b), the defrost start time is advanced by the minimum amount of time required to return the room temperature and the outlet heated water temperature of the heat exchanger 102 to pre-defrosting levels by the DR period start time ts (40 minutes in the above example). As such, it is possible to keep the amount of frost build-up at the DR period start time ts to a small amount since the time from the end of the defrosting to the DR period start time ts is not unnecessarily long.

For example, when the DR signal is received at 16:00 and defrosting is performed from 16:00, the room temperature and the outlet heated water temperature of the heat exchanger 102 return to pre-defrosting levels by 17:00, but the amount of time from the end of the defrosting until the DR period start time of 18:00 increases. Consequently, the amount of frost build-up at the DR period start time ts exceeds that of the second embodiment. This decreases the effectiveness of the operation of the heat pump 101 in the DR period and increases power consumption. With the second embodiment, power consumption by the heat pump 101 during the DR period can be reduced by timing and performing the advance defrosting so that the room temperature and the outlet heated water temperature of the heat exchanger 102 return to pre-defrosting levels directly before the DR period start time.

In this way, with the heat pump heating system control method according to the second embodiment, when it is determined in the advance defrost control process (S704 in FIG. 7) that the second defrost condition is satisfied, it is possible to avoid performing defrosting during the peak time period by timing the defrosting so that the room temperature and the outlet heated water temperature of the heat exchanger 102 return to pre-defrosting levels directly before the peak time period. Moreover, it is possible to improve the operating efficiency of the heat pump 101 during the peak time period without sacrificing comfort. This is useful as an operation method which contributes to the stabilization of grid power due to the peak cut, an increase in the comfort level of the user, and a decrease in user electricity expenses.

It should be noted that in the second embodiment, the amount of time that it takes for the room temperature and the outlet heated water temperature of the heat exchanger 102 to return to pre-defrosting levels is set at 40 minutes, but this time may be set by, for example, referring to room temperature recovery rates by the heat pump 101 with respect to past outside temperatures to predict a suitable recovery time.

It should be noted that both the first and second embodiments are written in regard to a heat pump hot water heating system, but the present invention is not limited to this, and may be a heat pump air conditioning unit.

It should be noted that although the present invention was described based on the previous embodiments, the present invention is not limited to these embodiments. The following examples are also intended to be included within the scope of the present invention.
(1) The preceding devices are, specifically, realized as a computer system configured from a microprocessor, ROM, RAM, a hard disk unit, a display unit, a keyboard, and a mouse, for example. A computer program is stored in the RAM or the hard disk unit. Each of the devices achieves its function as a result of the microprocessor operating according to the computer program. Here, the computer program is configured of a plurality of pieced together instruction codes indicating commands to be made to the computer in order to achieve a given function.
(2) A portion or all of the components of each of the preceding devices may be configured from one system LSI (Large Scale Integration). A system LSI is a super-multifunction LSI manufactured with a plurality of components integrated on a single chip, and specifically is a computer system configured of a microprocessor, ROM, and RAM, for example. A computer program is stored in the ROM. The system LSI achieves its function as a result of the microprocessor loading the computer program from the ROM into the RAM and performing operations such as calculations according to the computer program.
(3) A portion or all of the components of each of the preceding devices may each be configured from a detachable IC card or a stand-alone module. The IC card and the module are computer systems configured from a microprocessor, ROM, and RAM, for example. The IC card and the module may include the super-multifunction LSI described above. The IC card and the module achieve their function as a result of the microprocessor operating according to a computer program. The IC card and the module may be tamperproof.
(4) The present invention may be realized as a method shown above. Moreover, the present invention may also be realized as a computer program realizing these methods with a computer, or a digital signal of the computer program.
   Moreover, the present invention may also be realized as the computer program or the digital signal stored on storage media readable by a computer, such as a flexible disk, hard disk, CD-ROM, MO, DVD, DVD-ROM, DVD-RAM, BD (Blu-ray Disc), or a semiconductor memory. The present invention may also be realized as a digital signal stored on the above mentioned storage media.
   Moreover, the present invention may also transmit the computer program or the digital signal, for example, via an electric communication line, a wireless or wired line, a network such as the Internet, or data broadcasting.
   Moreover, the present invention may be a computer system including memory storing a computer program and a microprocessor operating according to the computer program.
   Moreover, the computer program or the digital signal may be implemented by an independent computer system by being stored on the storage media and transmitted, or sent via the network.
(5) The preceding embodiments and the preceding transformation examples may be individually combined.

Hereinbefore, the embodiments of the present invention were described with reference to the drawings, but the present invention is not limited to the embodiments depicted in the drawings. It is acceptable to add variations to or modify the embodiments depicted in the drawings within the scope of the invention defined by the claims.

### [Industrial Applicability]

The heat pump heating system control method according to the present invention is useful as an operation method which contributes to the stabilization of grid power due to the peak cut and a decrease in user electricity expenses since defrosting is not required during the peak time period, during which power consumption increases.

### [Reference Signs List]

- 1: heat pump heating system
- 4: energy supplier
- 5: electric load
- 6: first power meter
- 7: second power meter
- 8: system control unit
- 9: advance defrost control unit
- 80: communication unit
- 81: data collection unit
- 82: DR communication unit
- 83: output modulation operation control unit
- 91: defrost determination unit
- 92: defrost instruction unit
- 100: heat pump heating device
- 101: heat pump
- 101a, 102: heat exchanger
- 101b: compressor
- 101c: expansion valve
- 103: HP control unit
- 104: heating device
- 105: outside temperature detecting unit
- 106: outside humidity detecting unit
- 107: heat exchanger surface temperature detecting unit
- 108: heater
- 109: outlet heated water temperature detecting unit
- 110: flow rate detecting unit
- 111: inlet water temperature detecting unit

## Claims

1. A method of controlling a heating system that operates using power supplied from a power supply source (4), the heating system including:
- a heat pump (101) that generates heat using the power supplied from the power supply source; and
- a radiator unit (104) that radiates the heat generated by the heat pump (101), the heat pump (101) being operable in a heating mode for generating heat to be radiated by the radiating unit(104) and a defrost mode for removing frost formed on the heat pump,
the method comprising:
- obtaining, from the power supply source (4), an output modulation instruction specifying an output modulation period during which power consumption by the heat pump (101) is modulated;
- determining whether switching a mode of operation of the heat pump (101) to the defrost mode is required; and
- causing the heat pump (101) to switch the mode of operation to the defrost mode when switching the mode of operation to the defrost mode is determined to be required in the determining, and continue operating in the heating mode when switching the mode of operation to the defrost mode is not determined to be required in the determining;
wherein in the determining,
- switching the mode of operation to the defrost mode is determined to be required when a state of the heat pump (101) satisfies a first defrost condition in a period before the output modulation instruction is obtained in the obtaining, and
- switching the mode of operation to the defrost mode is determined to be required when the state of the heat pump (101) satisfies a second defrost condition in a given period occurring within a period starting when the output modulation instruction is obtained in the obtaining and ending at a start time of the output modulation period, the second defrost condition being more easily satisfied than the first defrost condition.

2. The method according to Claim 1,
wherein the determining is performed while the heat pump (101) is not operating in the defrost mode after obtaining the output modulation instruction.

3. The method according to Claim 1 or 2, further comprising
modulating operation of the heat pump (101) in the output modulation period,
wherein in the modulating, the heat pump (101) is caused to operate in an output modulation mode and prevented from operating in the defrost mode, the output modulation mode causing an output of the heat pump (101) to be smaller than an output of the heat pump (101) in the heating mode.

4. The method according to Claim 3,
wherein in the output modulation mode, the heat pump (101) operates at an output no greater than half of a rated output of the heat pump (101).

5. The method according to any one of Claims 1 to 4,
wherein the heating system holds information associating at least one of lengths of the output modulation period, outside temperatures, or outside humidities with respective ones of the second defrost conditions,
- in the obtaining, at least one of a length of the output modulation period, a current outside temperature, or a current outside humidity is obtained, and
- in the determining, whether switching the mode of operation of the heat pump to the defrost mode is required or not is determined by comparing (i) the second defrost condition that is associated with the at least one of the length of the output modulation period, the current outside temperature, or the current outside humidity obtained in the obtaining, and (ii) a current state of the heat pump.

6. The method according to Claim 5,
wherein the second defrost conditions held in the heating system are easier to satisfy for longer durations of the output modulation period, values of the outside temperature that are more approximate to a given value, or higher values of the outside humidity.

7. The method according to any one of Claims 1 to 6,
wherein the first defrost condition and the second defrost condition include a lower limit for a surface temperature of a heat exchanger included in the heat pump, and
the lower limit for the surface temperature of the heat exchanger in the second defrost condition is higher than the lower limit for the surface temperature of the heat exchanger in the first defrost condition.

8. The method according to any one of Claims 1 to 6,
wherein the first defrost condition and the second defrost condition include a lower limit for a temperature of a refrigerant in the heat pump, and
the lower limit for the temperature of the refrigerant in the second defrost condition is higher than the lower limit for the temperature of the refrigerant in the first defrost condition.

9. The method according to any one of Claims 1 to 4,
wherein when the state of the heat pump satisfies a defrost complete condition indicating that the frost has been removed, the heat pump is switched from the defrost mode to the heating mode, and
in the causing, the switching of the heat pump to the defrost mode is timed so that a temperature of a room in which the radiator unit is installed returns to a level prior to the heat pump switching to the defrost mode before the start time of the output modulation period.

10. A heating system that operates using power supplied from a power supply source, the heating system comprising
- a heating device and
- a system control unit configured to control the heating device,
the heating device including: a heat pump that generates heat using the power supplied from the power supply source; a radiator unit configured to radiate the heat generated by the heat pump; and
- a heat pump control unit configured to control operation of the heat pump,
the heat pump being switchable between a heating mode for generating heat to be radiated by the radiator unit and a defrost mode for removing frost formed on the heat pump, and the system control unit including:
- an obtaining unit configured to obtain, from the power supply source, an output modulation instruction specifying an output modulation period during which power consumption by the heat pump is modulated;
- a defrost determination unit configured to determine whether switching a mode of operation of the heat pump to the defrost mode is required; and
- a defrost instruction unit configured to cause the heat pump to switch the mode of operation to the defrost mode when the defrost determination unit determines that switching the mode of operation to the defrost mode is required, and continue operating in the heating mode when the defrost determination unit does not determine that switching the mode of operation to the defrost mode is required,
wherein when a state of the heat pump satisfies a first defrost condition in a period before the obtaining unit obtains the output modulation instruction, the heat pump control unit is configured to switch the mode of operation of the heat pump to the defrost mode, and
the defrost determination unit of the system control unit is configured to determine that, when the state of the heat pump satisfies a second defrost condition in a given period occurring within a period starting when the obtaining unit obtains the output modulation instruction and ending at a start time of the output modulation period, switching the mode of operation to the defrost mode is required, the second defrost condition being more easily satisfied than the first defrost condition.

11. The heating system according to Claim 10,
wherein the heating device further includes a heat pump control unit configured to control operation of the heat pump, and
when the heat pump control unit obtains the notification from the instruction unit, the heat pump control unit is configured to switch the mode of operation of the heat pump to the defrost mode before the start time of the output modulation period.

12. The heating system according to Claim 11,
wherein when the defrost determination unit determines that the state of the heat pump in the given period does not satisfy the first condition, the heat pump control unit is configured to cause the heat pump to operate in the heating mode, without switching the mode of operation of the heat pump to the defrost mode before the start time of the output modulation period.

13. The heating system according to any one of Claims 10 to 12,
wherein the heating device further includes a heat exchanger surface temperature detecting unit.

14. The heating system according to any one of Claims 10 to 13,
wherein the heat pump system control unit further includes an output modulation operation control unit configured to cause the heat pump to operate in an output modulation mode in the output modulation period, the output modulation mode causing an output of the heat pump to be smaller than an output of the heat pump in the heating mode.

15. The heating system according to any one of Claims 10 to 14, wherein the heat pump control unit is configured to switch the mode of operation of the heat pump between the heating mode for generating heat to be radiated by the radiator unit and the defrost mode for removing frost formed on the heat pump; and the
system control unit is configured to control the heat pump control unit.

## Patentansprüche

1. Verfahren zum Steuern eines Heizsystems, das mittels von einer Energieversorgung (4) zugeführter Energie arbeitet, wobei das Heizsystem aufweist:
- eine Wärmepumpe (101), die mittels der von der Energieversorgung (4) zugeführten Energie Wärme erzeugt; und
- eine Radiatoreinheit (104), die die durch die Wärmepumpe (101) erzeugte Energie abstrahlt,
wobei die Wärmepumpe (101) in einem Wärmemodus zum Erzeugen von Wärme, die von der Radiatoreinheit (104) abgestrahlt wird, und in einem Auftaumodus arbeiten kann, um auf der Wärmepumpe gebildeten Reif zu entfernen,
wobei das Verfahren umfasst:
- Erhalten einer Ausgangsmodulationsanweisung von der Energieversorgung (4), die einen Ausgangsmodulationszeitraum festlegt, während dem der Energieverbrauch durch die Wärmepumpe (101) moduliert wird;
- Bestimmen, ob ein Umschalten eines Betriebsmodus der Wärmepumpe (101) in den Auftaumodus erforderlich ist; und
- Veranlassen, dass die Wärmepumpe (101) den Betriebsmodus in den Auftaumodus umschaltet, wenn bestimmt wird, dass das Umschalten des Betriebsmodus in den Auftaumodus bei der Bestimmung erforderlich ist, und Weiterarbeiten im Wärmemodus, wenn nicht bestimmt wird, dass das Umschalten des Betriebsmodus in den Auftaumodus bei der Bestimmung erforderlich ist;
wobei bei der Bestimmung
- das Umschalten des Betriebsmodus in den Auftaumodus als erforderlich bestimmt wird, wenn ein Status der Wärmepumpe (101) eine erste Auftaubedingung in einem Zeitraum vor dem Erhalt der Ausgangsmodulationsanweisung beim Erhalten erfüllt, und
- das Umschalten des Betriebsmodus in den Auftaumodus als erforderlich bestimmt wird, wenn der Status der Wärmepumpe (101) eine zweite Auftaubedingung in einem vorgegebenen Zeitraum erfüllt, der innerhalb eines Zeitraums auftritt, der beginnt, wenn die Ausgangsmodulationsanweisung beim Erhalt erhalten wurde, und zu einer Startzeit des Ausgangsmodulationszeitraums endet, wobei die zweite Auftaubedingung leichter erfüllt wird als die erste Auftaubedingung.

2. Verfahren nach Anspruch 1,
wobei das Bestimmen durchgeführt wird, während die Wärmepumpe (101) nach dem Erhalt der Ausgangsmodulationsanweisung nicht im Auftaumodus arbeitet.

3. Verfahren nach Anspruch 1 oder 2, des Weiteren mit:
einem Modulationsvorgang der Wärmepumpe (101) im Ausgangsmodulationszeitraum,
wobei beim Modulieren die Wärmepumpe (101) veranlasst wird, im Ausgangsmodulationsmodus zu arbeiten und verhindert wird, dass sie im Auftaumodus arbeitet, wobei der Ausgangsmodulationsmodus eine kleinere Ausgabe der Wärmepumpe (101) bewirkt als eine Ausgabe der Wärmepumpe (101) im Wärmemodus.

4. Verfahren nach Anspruch 3,
wobei die Wärmepumpe (101) im Ausgangsmodulationsmodus bei einer Ausgabe arbeitet, die nicht größer ist als die Hälfte der bewerteten bzw. geschätzten Ausgabe der Wärmepumpe (101).

5. Verfahren nach einem der Ansprüche 1 bis 4,
wobei das Heizsystem Informationen besitzt, die wenigstens mit den Längen der Ausgangsmodulationszeiträume, den Außentemperaturen oder den äußeren Luftfeuchtigkeiten mit jeweiligen der zweiten Auftaubedingungen verbunden sind,
- beim Erhalt wenigstens eine Länge des Ausgangsmodulationszeitraums, eine gegenwärtige Außentemperatur oder die gegenwärtige äußere Luftfeuchtigkeit erhalten wird, und
- beim Bestimmen, ob ein Umschalten des Betriebsmodus der Wärmepumpe in den Auftaumodus erforderlich ist oder nicht, durch Vergleichen (i) der zweiten Auftaubedingung, die mit wenigstens der Länge des Ausgangsmodulationszeitraums, der gegenwärtigen Außentemperatur oder der gegenwärtigen äußeren Luftfeuchtigkeit verbunden ist, die beim Erhalt erhalten wurden, und (ii) einem gegenwärtigen Status der Wärmepumpe bestimmt wird.

6. Verfahren nach Anspruch 5,
wobei die zweiten im Heizsystem enthaltenen Auftaubedingungen für eine längere Dauer der Ausgangsmodulationszeiträume, Werte der Außentemperatur, die sich mehr einem vorgegebenen Wert nähern, oder höhere Werte der äußeren Luftfeuchtigkeit leichter zu erfüllen sind.

7. Verfahren nach einem der Ansprüche 1 bis 6,
wobei die erste Auftaubedingung und die zweite Auftaubedingung eine untere Grenze für eine Oberflächentemperatur eines in der Wärmepumpe enthaltenen Wärmetauschers aufweisen, und
die untere Grenze für die Oberflächentemperatur des Wärmetauschers in der zweiten Auftaubedingung höher ist als die untere Grenze für eine Oberflächentemperatur des Wärmetauschers in der ersten Auftaubedingung.

8. Verfahren nach einem der Ansprüche 1 bis 6,
wobei die erste Auftaubedingung und die zweite Auftaubedingung eine untere Grenze für eine Temperatur eines Kühlmittels in der Wärmepumpe aufweisen, und
die untere Grenze für die Temperatur des Kühlmittels in der zweiten Auftaubedingung höher ist als die untere Grenze der Temperatur des Kühlmittels in der ersten Auftaubedingung.

9. Verfahren nach einem der Ansprüche 1 bis 4,
wobei die Wärmepumpe vom Auftaumodus in den Heizmodus umgeschaltet wird, wenn der Status der Wärmepumpe eine vollständige Auftaubedingung erfüllt, die anzeigt, dass der Reif entfernt wurde, und
bei dem Bewirken, dass das Umschalten der Wärmepumpe in den Auftaumodus zeitlich so festgelegt ist, dass eine Temperatur in einem Raum, in dem die Radiatoreinheit installiert ist, auf einen Pegel zurückkehrt, bevor die Wärmepumpe vor der Startzeit des Ausgangsmodulationszeitraums in den Auftaumodus umschaltet.

10. Heizsystem, das mittels der von einer Energieversorgung zugeführten Energie arbeitet, wobei das Heizsystem umfasst:
- eine Heizvorrichtung und
- eine System-Steuereinheit, die konfiguriert ist, um die Heizvorrichtung zu steuern,
wobei die Heizvorrichtung aufweist: eine Wärmepumpe, die mittels der von der Energieversorgung zugeführten Energie Wärme erzeugt; eine Radiatoreinheit, die konfiguriert ist, um die durch die Wärmepumpe erzeugte Wärme abzustrahlen; und
- eine Wärmepumpen-Steuereinheit, die konfiguriert ist, um den Betrieb der Wärmepumpe zu steuern,
wobei die Wärmepumpe zwischen einem Heizmodus zum Erzeugen der durch die Radiatoreinheit abzustrahlenden Wärme und einem Auftaumodus zum Entfernen von auf der Wärmepumpe gebildetem Reif umschaltbar ist, und
die System-Steuereinheit aufweist:
- eine Erhaltungseinheit, die konfiguriert ist, um von der Energieversorgung eine Ausgangsmodulationsanweisung zu erhalten, die einen Ausgangsmodulationszeitraum festlegt, während dem der Energieverbrauch durch die Wärmepumpe moduliert wird;
- eine Auftau-Bestimmungseinheit, die konfiguriert ist, um zu bestimmen, ob ein Umschalten des Betriebsmodus der Wärmepumpe in den Auftaumodus erforderlich ist; und
- eine Auftau-Anweisungseinheit, die konfiguriert ist, um die Wärmepumpe zu veranlassen, den Betriebsmodus in den Auftaumodus umzuschalten, wenn die Auftau-Bestimmungseinheit bestimmt, dass das Umschalten des Betriebsmodus in den Auftaumodus erforderlich ist, und im Heizmodus weiterarbeitet, wenn die Auftau-Bestimmungseinheit nicht bestimmt, dass das Umschalten des Betriebsmodus in den Auftaumodus erforderlich ist,
wobei die Wärmepumpen-Steuereinheit konfiguriert ist, um den Betriebsmodus der Wärmepumpe in den Auftaumodus umzuschalten, wenn ein Status der Wärmepumpe eine erste Auftaubedingung in einem Zeitraum erfüllt, bevor die Erhaltungseinheit die Ausgangsmodulationsanweisung erhält, und
die Auftau-Bestimmungseinheit der System-Steuereinheit konfiguriert ist, um zu bestimmen, dass das Umschalten des Betriebsmodus in den Auftaumodus erforderlich ist, wenn der Status der Wärmepumpe eine zweite Auftaubedingung in einem vorgegebenen Zeitraum erfüllt, der in einem Zeitraum auftritt, wenn die Erhaltungseinheit beginnt, die Ausgangsmodulationsanweisung zu erhalten und an einer Startzeit des Ausgangsmodulationszeitraums endet, wobei zweite Auftaubedingung einfacher erfüllt wird als die erste Auftaubedingung.

11. Heizsystem nach Anspruch 10,
wobei das Heizsystem des Weiteren eine Wärmepumpen-Steuereinheit aufweist, die konfiguriert ist, um den Betrieb der Wärmepumpe zu steuern, und
die Wärmepumpen-Steuereinheit konfiguriert ist, um den Betriebsmodus der Wärmepumpe in den Auftaumodus vor der Startzeit des Ausgangsmodulationszeitraums umzuschalten, wenn die Wärmepumpen-Steuereinheit die Benachrichtigung von der Anweisungseinheit erhält.

12. Heizsystem nach Anspruch 12,
wobei die Wärmepumpen-Steuereinheit konfiguriert ist, um die Wärmepumpe zu veranlassen, im Wärmemodus zu arbeiten, ohne den Betriebsmodus der Wärmepumpe in den Auftaumodus vor der Startzeit des Ausgangsmodulationszeitraums umzuschalten, wenn die Auftau-Bestimmungseinheit bestimmt, dass der Status der Wärmepumpe in dem vorgegebenen Zeitraum nicht die erste Bedingung erfüllt.

13. Heizsystem nach einem der Ansprüche 10 bis 12,
wobei die Heizvorrichtung des Weiteren eine Oberflächentemperatur-Erfassungseinheit des Wärmetauschers aufweist.

14. Heizsystem nach einem der Ansprüche 10 bis 13,
wobei die Wärmepumpensystem-Steuereinheit des Weiteren eine Steuereinheit für den Ausgangsmodulationsbetrieb aufweist, die konfiguriert ist, um die Wärmepumpe zu veranlassen, in einem Ausgangsmodulationsmodus in dem Ausgangsmodulationszeitraum zu arbeiten, wobei der Ausgangsmodulationsmodus bewirkt, dass eine Ausgabe der Wärmepumpe kleiner ist als die Ausgabe der Wärmepumpe im Heizmodus.

15. Heizsystem nach einem der Ansprüche 10 bis 14,
wobei die Wärmepumpen-Steuereinheit konfiguriert ist, um den Betriebsmodus der Wärmepumpe zwischen dem Heizmodus zum Erzeugen von durch die Radiatoreinheit abgestrahlter Wärme und dem Auftaumodus zum Entfernen von auf der Wärmepumpe gebildetem Reif umzuschalten; und die
System-Steuereinheit konfiguriert ist, um die Wärmepumpen-Steuereinheit zu steuern.

## Revendications

1. Procédé de commande d'un système de chauffage qui fonctionne en utilisant de l'énergie fournie depuis une source d'alimentation (4), le système de chauffage incluant :
- une pompe à chaleur (101) qui génère de la chaleur en utilisant l'énergie fournie depuis la source d'alimentation, et
- une unité de radiateur (104) qui émet la chaleur générée par la pompe à chaleur (101),
la pompe à chaleur (101) pouvant être mise en oeuvre selon un mode de chauffage permettant de générer la chaleur à émettre par l'unité rayonnante (104), ainsi que selon un mode de dégivrage permettant d'éliminer le givre formé sur la pompe à chaleur,
le procédé comprenant :
- la récupération, en provenance de la source d'alimentation (4), d'une instruction de modulation en sortie spécifiant une période de modulation en sortie pendant laquelle la consommation d'énergie par la pompe à chaleur (101) est modulée,
- la détermination de ce que le basculement du mode de fonctionnement de la pompe à chaleur (101) vers le mode de dégivrage est demandé, et
- l'opération consistant à amener la pompe à chaleur (101) à basculer le mode de fonctionnement vers le mode de dégivrage lorsqu'il est déterminé que le basculement du mode de fonctionnement vers le mode de dégivrage est demandé lors de la détermination, et à poursuivre le fonctionnement dans le mode de chauffage lorsqu'il n'est pas déterminé que le basculement du mode de fonctionnement vers le mode de dégivrage est demandé lors de la détermination,
dans lequel, dans la détermination,
- il est déterminé que le basculement du mode de fonctionnement vers le mode de dégivrage est demandé lorsque l'état de la pompe à chaleur (101) satisfait à une première condition de dégivrage dans une période située avant que l'instruction de modulation en sortie soit obtenue lors de la récupération, et
- il est déterminé que le basculement du mode de fonctionnement vers le mode de dégivrage est demandé lorsque l'état de la pompe à chaleur (101) satisfait à une seconde condition de dégivrage dans une période de données se produisant à l'intérieur d'une période démarrant lorsque l'instruction de modulation en sortie est obtenue lors de la récupération et se terminant à l'instant de début de la période de modulation en sortie, la seconde condition de dégivrage étant plus facilement satisfaite que la première condition de dégivrage.

2. Procédé selon la revendication 1,
dans lequel la détermination est effectuée alors que la pompe à chaleur (101) ne fonctionne pas dans le mode de dégivrage après la récupération de l'instruction de modulation en sortie.

3. Procédé selon la revendication 1 ou la revendication 2, comprenant en outre :
une opération de modulation de la pompe à chaleur (101) dans la période de modulation en sortie,
dans lequel, lors de la modulation, la pompe à chaleur (101) est amenée à fonctionner dans le mode de dégivrage, le mode de modulation en sortie amenant la sortie de la pompe à chaleur (101) à être plus petit que la sortie de la pompe à chaleur (101) dans le mode de chauffage.

4. Procédé selon la revendication 3,
dans lequel, dans le mode de modulation en sortie, la pompe à chaleur (101) fonctionne en produisant une sortie qui n'est pas supérieure à la moitié de la sortie nominale de la pompe à chaleur (101).

5. Procédé selon l'une quelconque des revendications 1 à 4,
dans lequel le système de chauffage maintient des informations associant au moins l'une parmi : les longueurs de la période de modulation en sortie, les températures à l'extérieur ou les humidités à l'extérieur avec certaines respectives des secondes conditions de dégivrage,
- lors de la récupération, au moins l'une de la longueur de la période de modulation en sortie, de la température courante à l'extérieur ou de l'humidité courante à l'extérieur est récupérée, et
- lors de la détermination, le fait que le basculement du mode de fonctionnement de la pompe à chaleur vers le mode de dégivrage est demandé ou non et déterminé grâce à la comparaison (i) de la seconde condition de dégivrage, laquelle est associée avec le ou les paramètres suivants : longueur de la période de modulation en sortie, température courante à l'extérieur ou humidité courante à l'extérieur, obtenus lors de la récupération, et (ii) de l'état courant de la pompe à chaleur.

6. Procédé selon la revendication 5,
dans lequel les secondes conditions de dégivrage maintenues dans le système de chauffage sont plus faciles à satisfaire pendant des durées plus longues de la période de modulation en sortie, pour des valeurs de la température extérieure qui sont plus proches d'une valeur donnée ou pour des valeurs supérieures de l'humidité extérieure.

7. Procédé selon l'une quelconque des revendications 1 à 6,
dans lequel la première condition de dégivrage et la seconde condition de dégivrage incluent une limite inférieure pour la température de surface de l'échangeur de chaleur inclus dans la pompe à chaleur, et
la limite inférieure de la température de surface de l'échangeur de chaleur dans la seconde condition de dégivrage est supérieure à la limite inférieure de la température de surface de l'échangeur de chaleur dans la première condition de dégivrage.

8. Procédé selon l'une quelconque des revendications 1 à 6,
dans lequel la première condition de dégivrage et la seconde condition de dégivrage incluent une limite inférieure pour la température du réfrigérant dans la pompe à chaleur, et
la limite inférieure de la température du réfrigérant dans la seconde condition de dégivrage est supérieure à la limite inférieure de la température du réfrigérant dans la première condition de dégivrage.

9. Procédé selon l'une quelconque des revendications 1 à 4,
dans lequel, lorsque l'état de la pompe à chaleur satisfait à une condition d'achèvement de dégivrage indiquant que le givre a été éliminé, la pompe à chaleur est basculée du mode de dégivrage au mode de chauffage, et
dans la phase de programmation du mode, le basculement de la pompe à chaleur vers le mode de dégivrage est minuté de telle sorte que la température de la pièce dans laquelle est installée l'unité de radiateur revient à un niveau antérieur au moment où la pompe à chaleur a basculé vers le mode de dégivrage avant l'instant de début de la période de modulation de sortie.

10. Système de chauffage qui fonctionne en utilisant de l'énergie fournie d'une source d'alimentation, le système de chauffage comprenant :
- un dispositif de chauffage, et
- une unité de commande de système configurée pour commander le dispositif de chauffage,
le dispositif de chauffage incluant : une pompe à chaleur qui génère de la chaleur en utilisant l'énergie fournie depuis une source d'alimentation, une unité de radiateur configurée pour émettre la chaleur générée par la pompe à chaleur, et
- une unité de commande de pompe à chaleur configurée pour commander le fonctionnement de la pompe à chaleur,
la pompe à chaleur pouvant être basculée entre un mode de chauffage permettant de générer de la chaleur à émettre par l'unité de radiateur et un mode de dégivrage permettant d'éliminer le givre formé sur la pompe à chaleur, et
l'unité de commande de système incluant :
- une unité de récupération configurée pour obtenir de la source d'alimentation une instruction de modulation en sortie spécifiant une période de modulation en sortie pendant laquelle la consommation de puissance par la pompe à chaleur est modulée,
- une unité de détermination de dégivrage configurée pour déterminer si le basculement du mode de fonctionnement de la pompe à chaleur vers le mode de dégivrage est demandé, et
- une unité d'instruction de dégivrage configurée pour amener la pompe à chaleur à basculer le mode de fonctionnement vers le mode de dégivrage lorsque l'unité de détermination de dégivrage à défini que le basculement du mode de fonctionnement vers le mode de dégivrage est demandé, et pour poursuivre le fonctionnement dans le mode de chauffage lorsque l'unité de détermination de dégivrage n'a pas déterminé que le basculement du mode de fonctionnement vers le mode de dégivrage est demandé,
dans lequel, lorsque l'état de la pompe à chaleur satisfait à une première condition de dégivrage dans une période située avant que l'unité de récupération ait obtenu l'instruction de modulation en sortie, l'unité de commande de pompe à chaleur est configurée pour basculer le mode de fonctionnement de la pompe à chaleur vers le mode de dégivrage, et
l'unité de détermination de dégivrage de l'unité de commande du système est configurée pour déterminer que, lorsque l'état de la pompe à chaleur satisfait à une seconde condition de dégivrage dans une période donnée se produisant dans un intervalle de temps démarrant lorsque l'unité de récupération a obtenu l'instruction de modulation en sortie et se terminant à l'instant de début de la période de modulation en sortie, le basculement du mode de fonctionnement vers le mode de dégivrage est demandé, la seconde condition de dégivrage étant plus facilement satisfaite que la première condition de dégivrage.

11. Système de chauffage selon la revendication 10,
dans lequel le dispositif de chauffage inclut en outre une unité de commande de pompe à chaleur configurée pour commander le fonctionnement de la pompe à chaleur, et
lorsque l'unité de commande de pompe à chaleur récupère la notification provenant de l'unité d'instruction, l'unité de commande de pompe à chaleur est configurée pour basculer le mode de fonctionnement de la pompe à chaleur vers le mode de dégivrage avant l'instant de début de la période de modulation en sortie.

12. Système de chauffage selon la revendication 11,
dans lequel, lorsque l'unité de détermination de dégivrage a déterminé que l'état de la pompe à chaleur dans la période donnée ne satisfait pas à la première condition, l'unité de commande de pompe à chaleur est configurée pour amener la pompe à chaleur à fonctionner dans le mode de chauffage sans basculer le mode de fonctionnement de la pompe à chaleur vers le mode de dégivrage avant l'instant de début de la période de modulation en sortie.

13. Système de chauffage selon l'une quelconque des revendications 10 à 12,
dans lequel le dispositif de chauffage inclut en outre une unité de détection de température de surface d'échangeur de chaleur.

14. Système de chauffage selon l'une quelconque des revendications 10 à 13,
dans lequel l'unité de commande de système de pompe à chaleur inclut en outre une unité de commande de fonctionnement de modulation en sortie configurée pour amener la pompe à chaleur à fonctionner dans un mode de modulation en sortie dans la période de modulation en sortie, le mode de modulation en sortie amenant la sortie de la pompe à chaleur à être plus petite que la sortie de la pompe à chaleur dans le mode de chauffage.

15. Système de chauffage selon l'une quelconque des revendications 10 à 14, dans lequel l'unité de commande de pompe à chaleur est configurée pour faire basculer le mode de fonctionnement de la pompe à chaleur entre le mode de chauffage permettant de générer de la chaleur à émettre grâce à l'unité de radiateur, et le mode de dégivrage permettant d'éliminer le givre formé sur la pompe à chaleur, et
l'unité de commande de système est configurée pour commander l'unité de commande de la pompe à chaleur.
